# EUROPÄISCHE PATENTANMELDUNG

(11) **EP 1 627 949 A2**
(43) Veröffentlichungstag der Anmeldung: **22.02.2006**
(21) Anmeldenummer: 05021007.9
(22) Anmeldetag: 11.07.2002
(51) Int. Cl.: D21B 1/02, B03B 5/00

(54) **Vorrichtung zum Trennen von insbesondere faserartigen Gebilden sowie Verfahren zum Trennen von Leichtstoffen**

(30) Priorität: 11.07.2001 DE 10133099; 24.08.2001 DE 10140698; 24.08.2001 DE 10143373; 12.11.2001 DE 10154895
(62) Teilanmeldung aus: 02015430.8
(71) Anmelder: Repa Boltersdorf GmbH, 56656 Brohl-Lützing (DE)
(72) Erfinder: Boltersdorf, Hans-Joachim, 56656 Brohl-Lützing (DE)
(74) Vertreter: Castell, Klaus

(57) **Zusammenfassung**

Um Sortiervorrichtungen bzw. Sortierverfahren von faserartigen Gebilden bzw. Leichtstoffen zu verbessern und weiter zu entwickeln, schlägt die Erfindung eine Vorrichtung und ein Verfahren zum Trennen von Leichtstoffen von Anhaftungen vor, bei welchem die Leichtstoffe mit den Anhaftungen in einen Zulaufbereich (193) geführt und die Anhaftungen (212) von den Leichtstoffen (208) getrennt sowie ein Teil der getrennten Anhaftungen (212) durch eine Rückhalteeinrichtung (192) in einen Ablaufbereich (194) gelangen und dort entnommen werden, welches sich dadurch auszeichnet, dass die Leichtstoffe (208) sowie größere oder längere Anhaftungen in dem Zulaufbereich (193) verbleiben und dort abgezogen werden.

## Beschreibung

Die Erfindung betrifft eine Vorrichtung zum Trennen von Leichtstoffen von Anhaftungen gelöst, welche eine Rückhalteeinrichtung aufweist, die einen Arbeitsbereich in einen Zulaufbereich und in einen Ablaufbereich unterteilt, wobei in dem Zulaufbereich eine Suspension aus den Leichtstoffen, den Anhaftungen sowie einer Trägerflüssigkeit bewegt. Die Erfindung betrifft darüber hinaus ein Verfahren zum Trennen von Leichtstoffen von Anhaftungen gelöst, bei welchem die Leichtstoffe mit den Anhaftungen in einen Zulaufbereich geführt und die Anhaftungen von den Leichtstoffen getrennt werden sowie ein Teil der getrennten Anhaftungen durch eine Rückhalteeinrichtung in einen Ablaufbereich gelangen und dort entnommen werden.

Beispielsweise ist aus der EP 0 829 571 A1 ein Pulper bekannt, mit welchem faserartige Stoffe von aus der Papierherstellung aussortierten Reststoffen getrennt werden. Hierfür umfasst der Pulper eine Rückhalteeinrichtung, mit welcher die Reststoffen in einem ersten Bereich zurückgehalten werden. Die Reststoffe gelangen dann zur weiteren Behandlung mittels einer Art Überlauf aus dem Pulper heraus. Jedoch hat sich in der Praxis gezeigt, dass sich dieser Pulper nicht dazu eignet, eine Suspension mit einer hohen Stoffdichte zu verarbeiten. Auf Grund dessen weist der hier beschriebene Pulper einen nur geringen Wirkungsgrad auf, so dass er wirtschaftlich nicht betrieben werden kann.

Ein weiterer Pulper ist in der DE 198 33 580 A1 beschrieben. Dieser Pulper hat einen Faserstoffaustrag, einen Begleitstoffaustrag sowie eine Rückhalteeinrichtung für Reststoffe. Insbesondere der Begleitstoffaustrag umfasst eine Schnecken- oder Wendelschleuse. Die Schnecken- oder Wendelschleuse ist jedoch im unteren Bereich des Pulpers hinter der Rückhalteeinrichtung in dem Begleitstoffaustrag angeordnet. Hierbei werden die Begleitstoffe nach unten aus dem Pulper geführt. Auch hinsichtlich dieser Pulperkonstruktion hat sich herausgestellt, dass der Pulper ebenfalls nicht dazu geeignet ist, eine Suspension mit einer hohen Stoffdichte zu verarbeiten.

Es ist Aufgabe vorliegender Erfindung, gattungsgemäße Trennvorrichtungen bzw. Trennverfahren weiterzuentwickeln und hierdurch zu verbessern.

Die Aufgabe der Erfindung wird einerseits von einer Vorrichtung zum Trennen von Leichtstoffen von Anhaftungen gelöst, welche eine Rückhalteeinrichtung aufweist, die einen Arbeitsbereich in einen Zulaufbereich und in einen Ablaufbereich unterteilt, wobei in dem Zulaufbereich eine Suspension aus den Leichtstoffen, den Anhaftungen sowie einer Trägerflüssigkeit bewegt wird und wobei in dem Zulaufbereich eine Leichtstoffaustragsöffnung mit einem Abzug angeordnet ist.

Der Abzug ermöglicht es hierbei insbesondere eine Suspension aus Leichtstoffen, großen oder langen Anhaftungen, wie langen Fasern, und Trägerflüssigkeit dem Zulaufbereich gezielt zu entnehmen, wodurch die Trennvorrichtung auch bei hoher Stoffdichte betrieben werden kann, ohne dass sie sich, insbesondere an der Rückhalteeinrichtung, zusetzt. Die hohe Stoffdichte wiederum ermöglicht eine besonders effektive Trennung der Anhaftungen.

Die im Sinne der Erfindung erfassten Leichtstoffe haben oft Anhaftungen, die von einer faserartigen Gestalt sein können. Insbesondere die faserartigen Anhaftungen können nach dem Trennen von den Leichtstoffen besonders vorteilhaft hinsichtlich eines Produkts auf Basis von recyceltem Material genutzt werden. Ebenso ist es möglich, die Leichtstoffe, nachdem sie wenigstens weitgehend von diesen Anhaftungen befreit sind, zu recyceln.

Dadurch, dass die Leichtstoffe mittels einer separaten Leichtstoffaustragsöffnung aus der Vorrichtung entnommen werden, sind diese wesentlich effektiver von den Anhaftungen zu trennen, da ein Trennen von Leichtstoffen und an diesen anhaftenden Materialien schon innerhalb des Pulpers stattfindet.

Besonders vorteilhaft ist es, wenn die Leichtstoffaustragsöffnung einen Separationsabstand gegenüber der Rückhalteeinrichtung aufweist. Hierdurch legen die Leichtstoffe innerhalb des Zulaufbereichs eine weitaus größere Distanz zurück, so dass sie dort auf Grund des längeren Weges wesentlich gründlicher gereinigt werden. Da die Leichtstoffe nicht unmittelbar im Bereich der Rückhalteeinrichtung aus dem Arbeitsbereich sondern vielmehr nochmals von der Rückhalteeinrichtung weg in den Zulaufbereich hinein heraus befördert werden, entstehen innerhalb des Zulaufbereiches Umkehrströmungen. Vorteilhafter Weise werden mittels dieser Umkehrströmungen die Leichtstoffe und die Anhaftungen voneinander getrennt.

Die kurz vor der Leichtstoffaustragsöffnung stehenden Leichtstoffe sind besonders gut von den Anhaftungen separiert, wenn der Separationsabstand mehr als 10 mm, vorzugsweise mehr als 30 mm, beträgt.

Eine Ausführungsvariante sieht vor, dass in dem Zulaufbereich ein Verdichter angeordnet ist, in dessen Nähe eine Leichtstoffaustragsöffnung oberhalb der Verdichterunterseite angeordnet ist. Insbesondere wenn die Verdichterunterseite unmittelbar in der Nähe der Rückhalteeinrichtung angeordnet bzw. die Verdichterunterseite ein Bestandteil der Rückhalteeinrichtung ist, ist es vorteilhaft, wenn die Leichtstoffaustragsöffnung oberhalb der Verdichterunterseite angeordnet ist. Darüber hinaus ist hierdurch gewährleistet, dass die Leichtstoffaustragsöffnung einen Abstand zu der Rückhalteeinrichtung aufweist.

Es ist möglich, den Verdichter an einer beliebigen Stelle im Zulaufbereich anzuordnen. Um jedoch eine besonders günstige und gleichmäßige Verteilung der Leichtstoffe innerhalb des Zulaufbereichs zu erhalten, ist es vorteilhaft, wenn der Verdichter zentral in dem Zulaufbereich angeordnet ist.

Um die Leichtstoffe aus einem Bereich entnehmen zu können, in dem die Leichtstoffe besonders einträglich von ihren Anhaftungen getrennt wurden, ist es vorteilhaft, wenn die Leichtstoffaustragsöffnung in einem Abstand von der Verdichterunterseite angeordnet ist, der wenigstens ein Viertel der Verdichterlänge, vorzugsweise die Hälfte der Verdichterlänge, beträgt.

Damit die Leichtstoffe besonders günstig gegeneinander gepresst bzw. gerieben sowie durch den Zulaufbereich bewegt werden, ist es vorteilhaft, wenn der Verdichter als eine archimedische Schnecke ausgebildet ist. Mittels der archimedischen Schnecke werden die Leichtstoffe derart innerhalb des Zulaufbereichs bewegt, dass sie besonders gut gegeneinander gerieben und hierbei die Anhaftungen von den Leichtstoffen besonders intensiv getrennt werden. Insbesondere im Bereich der Leichtstoffzufuhr, wird ein besonders guter Press- und Reibeffekt zwischen den Leichtstoffen erreicht, wodurch sich die Anhaftungen von den Leichtstoffen besonders intensiv trennen.

Es ist besonders vorteilhaft, wenn die Leichtstoffaustragsöffnung derart beabstandet von der Rückhalteeinrichtung ist, dass die Leichtstoffaustragsöffnung im Wesentlichen außerhalb einer in der Nähe der Rückhalteeinrichtung vorhandenen Umkehrströmung angeordnet ist. Wie eingangs schon erwähnt, werden die Leichtstoffe in der Umkehrströmung besonders intensiv gereinigt. Somit ist es vorteilhaft, die Leichtstoffe erst nach einem Passieren einer Umkehrströmung aus einen Zulaufbereich zu entnehmen.

Da die Merkmale hinsichtlich der Anordnung der Leichtstoffaustragsöff nung außerhalb einer Umkehrströmung, ist auch unabhängig von den übrigen Merkmalen der Erfindung vorteilhaft sind, sind sie auch ohne die übrigen Merkmale der Erfindung erfinderisch.

Um beispielsweise zu verhindern, dass in den Arbeitsbereich eingebrachte Leichtstoffe unzureichend bearbeitet und allzu schnell den Zulaufbereich der Vorrichtung wieder verlassen, ist es vorteilhaft, wenn die Leichtstoffaustragsöffnung unterhalb und/oder gegenüberliegend einer Zulauföffnung angeordnet ist. Hierdurch ist gewährleistet, dass die Leichtstoffe zum Reinigen möglichst lang im Zulaufbereich verweilen.

Ein kontinuierlicher Austrag von gereinigten Leichtstoffen aus dem Arbeitsbereich ist gewährleistet, wenn der Abzug eine Schnecken- oder Wendelschleuse aufweist. Darüber hinaus wird auf Grund der Schnecken- oder Wendelschleuse die Gefahr verringert, dass es innerhalb des Zulaufbereiches, insbesondere an der Leichtstoffaustragsöffnung, zu einer ungewollten Ansammlung von Leichtstoffen kommt. Hierdurch kann vermieden werden, dass sich die Leichtstoffaustragsöffnung derart zusetzt, dass ein Leichtstoffaustrag aus dem Zulaufbereich eingeschränkt oder gänzlich unterbunden ist.

Um beispielsweise einen Leichtstoffstau unmittelbar vor der Leichtstoffaustragsöffnung zu verhindern bzw. diesbezüglich die Gefahr weiter zu verringern, kann die Schnecken- oder Wendelschleuse über die Leichtstoffaustragsöffnung des Abzugs hinaus bis in den Arbeitsbereich hinein angeordnet sein.

Es versteht sich, dass ein Abzug auch durch weitere bzw. andere Einrichtungen realisiert werden kann. Im Wesentlichen muss diese Einrichtung lediglich in der Lage sein, die Leichtstoffe aktiv aus dem Zulaufbereich zu befördern. Mit welchen Mitteln dies geschieht, ist im vorliegenden Fall nicht ausschlaggebend.

Eine weitere Ausführungsvariante sieht vor, dass der Abzug derart in einem Winkel gegenüber der Rückhalteeinrichtung angeordnet ist, dass die Leichtstoffe nach oben, im Wesentlichen entgegen der Schwerkraft, aus dem Arbeitsbereich entnommen werden. Hierdurch werden die gereinigten Leichtstoffe nach oben aus der Vorrichtung heraus gefördert. Insbesondere wird dadurch ein Knick im Bereich der Leichtstoffaustragsöffnung vermieden, der den Austrag ansonsten behindern könnte. Eine derartige Ausrichtung des Abzugs begünstigt das Austragen der Leichtstoffe aus dem Zulaufbereich, da die Austragsrichtung in etwa der Strömungsrichtung der Leichtstoffe unmittelbar vor der Austragsöffnung entspricht.

Es versteht sich, dass die Merkmale hinsichtlich der Anordnung der Leichtstoffaustragsöffnung relativ zu dem Verdichter bzw. zu der Verdichterunterseite sowie die Richtung des Abzugs auch ohne die übrigen Merkmale der Vorrichtung vorteilhaft und somit auch erfinderisch sind.

Darüber hinaus wird die Erfindung andererseits auch von einem Verfahren zum Trennen von Leichtstoffen von Anhaftungen gelöst, bei welchem die Leichtstoffe mit den Anhaftungen in einen Zulaufbereich geführt und die Anhaftungen von den Leichtstoffen getrennt werden sowie ein Teil der getrennten Anhaftungen durch eine Rückhalteeinrichtung in einen Ablaufbereich gelangen und dort entnommen werden, wobei die Leichtstoffe sowie größere oder längere Anhaftungen in dem Zulaufbereich verbleiben und dort abgezogen werden. Mittels des erfinderischen Verfahrens wird eine hohe die Trennung fordernde Stoffdichte ermöglicht, da die Leichtstoffe und große bzw. lange Anhaftungen separat aus der Vorrichtung abgezogen werden.

Besonders vorteilhaft ist es, wenn die Leichtstoffe beabstandet von der Rückhalteeinrichtung aus dem Zulaufbereich abgezogen werden. Hierdurch werden die Leichtstoffe bei der Entnahme nicht gegen die Rückhalteeinrichtung gedrückt, sondern von der Rückhalteeinrichtung weggeführt. Somit ist zum einen die Gefahr eines Verstopfens der Rückhalteeinrichtung weiter verringert.

Vorteilhafter Weise werden die Leichtstoffe beim Zuführen in den Zulaufbereich gegen einen Verdichter geführt. Hierdurch erhöht sich die Reibung der Leichtstoffe untereinander, so dass durch diesen Effekt Anhaftungen, welche an den Leichtstoffen haften, besonders gründlich von den Leichtstoffen getrennt werden.

Um die Reibung hinsichtlich der Leichtstoffe innerhalb des Zulaufbereiches weiter zu erhöhen, ist es vorteilhaft, wenn die Leichtstoffe innerhalb des Zulaufbereichs in einer Zirkulationsströmung gefördert werden. Dies geschieht dadurch, dass der Verdichter vorzugsweise die Leichtstoffe gegen die Rückhalteeinrichtung weg fördert. Hierdurch verdichtet sich ein Teil der Leichtstoffe, so dass zumindest dieser Teil besonders gründlich gereinigt wird.

Damit trotz der Förderrichtung des Verdichters entgegen der Zuführrichtung Leichtstoffe in den Zulaufbereich der Vorrichtung eingebracht werden können, ist es vorteilhaft, wenn die Leichtstoffe dem Zulaufbereich kraftschlüssig zugeführt werden. Dies geschieht vorzugsweise mittels einer Schnecken- bzw. Wendelschleuse.

Eine bevorzugte Verfahrensvariante sieht vor, dass ein mit Leichtstoffen befüllter Zulaufbereich zu mehr als 70%, vorzugsweise zu mehr als 90%, seines Volumens mit einer Suspension geflutet wird. Durch einen derart großen Anteil an Suspension im Pulper ist gewährleistet, dass die an den Leichtstoffen anhaftenden Fasern besonders gut getrennt werden und die Faser durch die Rückhalteeinrichtung gelangen und hierdurch effektiv separiert werden.

Die Aufgabe der Erfindung wird auch gelöst von einer Vorrichtung zum Trennen von insbesondere faserartigen Gebilden aus einem Massenstrom mit einem Trennmittel, welches eine Trennfläche aus Trennspalten und umlaufenden Trennkörpern aufweist, die sich dadurch kennzeichnet, dass die Trennspalten stationär angeordnet sind.

Im vorliegenden Fall umfasst der Begriff "Trennfläche" ein im wesentlichen flächiges Gebiet, an bzw. in dem die gewünschte Trennung stattfindet. Zwar muss die Trennfläche nicht zwingend stationär angeordnet sein. Um jedoch ein Auflaufen von Stoff zu vermeiden, werden sämtliche zu trennende Komponenten des Massestroms bezüglich der Trennfläche bewegt.

Als umlaufender Trennkörper kann im Sinne der Erfindung eine Vielzahl an Bauteilen verwendet werden. Beispielsweise kommen hierbei umlaufende Bänder oder umlaufende Drähte zu Einsatz. Als besonders vorteilhaft haben sich Endlosriemen erwiesen, da diese aufgrund ihrer gummiartigen Materialeigenschaften einen besonders guten Grip bilden und hierdurch die in dem Massestrom vorhandenen Leichtstoffe effektiv mitreißen, sobald die Leichtstoffe mit dem Endlosriemen in Kontakt kommen.

Im Sinne der Erfindung versteht man unter dem Begriff "stationäre Trennspalten" bezüglich der Trennfläche stationäre, materialfreie Bereiche der Trennfläche. Diese werden im vorliegenden Fall erfindungsgemäß durch Zwischenräume zwischen den einzelnen im Wesentlichen parallel nebeneinander angeordneten Trennkörpern gebildet, so dass die Trennspalten baulich besonders einfach bereitgestellt sind.

Aufgrund der erfindungsgemäßen stationären Trennspalten des Trennmittels ist eine Trennfläche gefunden worden, an welcher insbesondere das Trägermedium eines Suspensionsgemenges schnell und unproblematisch abgeführt werden kann, so dass darin vorhandene faserartige Gebilde ebenfalls schnell und effektiv von der Trennfläche entfernt werden können.

Darüber hinaus haben die stationären Trennspalten gegenüber herkömmlichen mit einem Trennkörper umlaufende Trennspalten den Vorteil, dass die stationären Trennspalten keine Querstreben bzw. keine in Querrichtung verlaufenden Begrenzungen aufweisen und hierdurch die Gefahr verringert ist, dass sich die stationären Trennspalten durch die faserartigen Gebilde zusetzen bzw. verstopfen. Hierdurch ist die Gefahr eines Zusetzens der Trennfläche wesentlich verringert und die Betriebssicherheit der Trennvorrichtung im allgemeinen Wesentlich verbessert. Schließlich werden hierdurch zum einen eine verbesserte Trennqualität und zum anderen ein sichereres Trennen der faserartigen Gebilde von den Leichtstoffen ermöglicht.

Um den umlaufenden Trennkörper leicht reinigen zu können, ist es vorteilhaft, wenn der umlaufende Trennkörper mittels eines vorzugsweise mehrfach umlaufenden Endlosriemens bereitgestellt wird. Als Endlosriemen kann hierbei jeder umlauffähige lineare oder flächige Anordnung, die ansonsten keine Strukturen in der Größenordnung der Trennspalte aufweist, zur Anwendung kommen. Hierbei wird der umlaufende Endlosriemen zum Realisieren der Trennfläche mehrfach parallel nebeneinander geführt und an der den faserartigen Gebilden abgewandten Seite der Trennfläche zurückgeführt. Vorzugsweise wird der Endlosriemen im Bereich der Rückführung gereinigt, so dass fortlaufend eine möglichst saubere Trennfläche zur Verfügung steht. Die Reinigung kann hierbei rundum die gesamte Oberfläche des Riemens ohne weiteres erfassen. Darüber hinaus ist die erfindungsgemäße Trennfläche mit dem Endlosriemen baulich besonders einfach realisiert.

Um die vorstehend beschriebenen stationären Trennspalten baulich besonders einfach bereitzustellen, ist es vorteilhaft, wenn die Trennspalten in Richtung ihrer Längserstreckung wenigstens an einer Seite lediglich mittels der umlaufenden Trennkörper seitlich begrenzt sind. Hierdurch kann auf weitere Bauteile zum Realisieren der stationären Trennspalten verzichtet werden.

Es ist vorteilhaft, wenn die stationären Trennspalten in Richtung ihrer Längserstreckung jeweils wenigstens der Erstreckung der durch die Trennkörper gebildeten Trennfläche entsprechen. Hierdurch ist eine Trennspalte realisiert, die eine durchgehende Öffnung aufweist. Beispielsweise können sich hierbei faserartige Gebilde an Querstreben, die eine Trennspalte in ihrer Längserstreckung begrenzen, innerhalb der Trennspalte nicht anlagern und diese verstopfen. Somit umfassen die stationären Trennspalten im Gegensatz zu herkömmlichen Siebbändern vorteilhafter Weise eine permanente Längsöffnung.

Um ein Anlagern von faserartigen Gebilden auch im Anfangs- bzw. Endbereich der Trennfläche zu unterbinden, ist es vorteilhaft, wenn die stationären Trennspalten im Bereich der Trennfläche wenigstens an ihrer in Bewegungsrichtung der Trennkörper angeordneten Stirnseite offen sind.

Eine Ausführungsvariante sieht vor, dass die umlaufenden Trennkörper in Richtung ihrer Haupterstreckung eine Geschwindigkeitskomponente v_{Tx} aufweisen, die gegenüber einer Geschwindigkeitskomponente v_{Lx} des der Trennfläche zugeführten Massestroms um einen Betrag Δvₖᵣᵢₜ erhöht ist.

Im vorliegenden Zusammenhang bezeichnet der Begriff "Geschwindigkeitskomponente v_{Tx}", eine Geschwindigkeit, die der umlaufende Trennkörper im Bereich der Trennfläche aufweist und die im Wesentlichen parallel zu der Trennfläche in Umlaufrichtung der Trennkörper gerichtet ist.

Dementsprechend bezeichnet der Begriff "Geschwindigkeitskomponente v_{Lx} "eine Geschwindigkeit, die der Massestrom, insbesondere Leichtstoffe des Massestroms, im Bereich der Trennfläche aufweist bzw. aufweisen und die im Wesentlichen parallel zur Trennoberfläche in Umlaufrichtung der Trennkörper gerichtet ist.

Dadurch, dass sich die umlaufenden Trennkörper mit einer höheren Geschwindigkeit bewegen als die Geschwindigkeit, mit welcher der Massestrom auf die Trennfläche aufgebracht wird, entsteht insbesondere hinsichtlich der Leichtstoffe ein Mitreißeffekt, bei welchem die mit dem umlaufenden Trennkörper in Kontakt tretenden Leichtstoffe sehr schnell auf die Geschwindigkeit des umlaufenden Trennkörpers beschleunigt werden. Im Zuge dieser Beschleunigung bleiben insbesondere faserartige Gebilde, welche bis zu diesem Zeitpunkt an den Leichtstoffen anhaften, aufgrund auftretender Reibung gegenüber dem Trägermedium des Suspensionsgemenges in dem selbigen zurück, wodurch ein besonders effektives Trennen der faserartigen Gebilde von den Leichtstoffen realisiert ist.

Die Höhe der Differenz Δvₖᵣᵢₜ zwischen der Geschwindigkeitskomponente v_{Tx} und der Geschwindigkeitskomponente v_{Lx} ist hierbei im Wesentlichen abhängig von den Materialien, welche der Massestrom aufweist. Hierdurch bedingt, hat der Betrag Δvₖᵣᵢₜ keinen fixen Wert, sondern richtet sich nach den Materialien, die voneinander getrennt werden sollen. Im vorliegenden Fall sind dies die Leichtstoffe, von denen faserartige Gebilde getrennt werden sollen.

Es hat sich herausgestellt, dass es vorteilhaft ist, wenn der Betrag ΔVₖᵣᵢₜ größer als 0,3 m/s, vorzugsweise größer als 0,5 m/s, ist. Durch das Variieren beider Relativgeschwindigkeiten v_{Tx} und v_{Lx} kann die Trennschärfe, welche der Trennvorrichtung zugrundegelegt wird, variiert werden. Es versteht sich, dass bei einer höheren Geschwindigkeitsdifferenz Δvₖᵣᵢₜ eine höhere Trennschärfe erreicht werden kann.

Der Begriff "Trennschärfe" beschreibt hierbei die Qualität des Trennvermögens, welches mit einer Trennvorrichtung erreicht werden kann.

Hierbei ist anzumerken, dass die Merkmale hinsichtlich der unterschiedlichen Geschwindigkeitskomponenten v_{Tx} und v_{Lx} auch unabhängig von den übrigen Merkmalen der Erfindung erfinderisch sind. Dieses zeigt sich insbesondere, wenn der Massestrom ein Suspensionsgemenge umfassend feste, zu separierende Stoffe sowie ein Trägermedium, wie z. B. Wasser, darstellt.

Um ein ausreichendes Ablaufen des Trägermediums, insbesondere mit darin vorhandenen getrennten faserartigen Gebilden, durch die Trennfläche zu gewährleisten, ist es vorteilhaft, wenn der lichte Abstand zwischen zwei im Wesentlichen parallel zueinander verlaufenden Trennkörpern größer als 0,1 mm ist. Um zu gewährleisten, dass selbst kleinste Leichtstoffe nicht durch die Trennfläche bzw. durch deren stationären Trennspalten gelangen, ist es vorteilhaft, wenn die Trennkörper einen Abstand aufweisen, der weniger als 2 mm beträgt. Eine Ausführungsvariante, bei welcher der Abstand 0,3 mm beträgt, hat sich im vorliegenden Zusammenhang als besonders geeignet erwiesen. Verständlicher Weise werden durch derartige Abstände zwischen den Trennkörpern stationäre Trennspalten bereitgestellt, die eine Breite von 0,3 mm aufweisen. Durch diese kann das Trägermedium mit den darin befindlichen faserartigen Gebilden besonders gut abfließen.

Um die Trennschärfe der Vorrichtung weiter zu erhöhen, ist vorgeschlagen, dass das Trennmittel wenigstens einen stationären Trennsteg aufweist, welcher in einem stationären Trennspalt angeordnet ist. Der Trennsteg verläuft hierbei im Wesentlichen parallel zu den Trennkörpern und ist zwischen zwei Trennkörpern im Trennspalt angeordnet. Diesbezüglich bezieht sich der Begriff "stationär" auf die Trennfläche.

Der Trennsteg läuft vorzugsweise an seiner dem Massestrom zugewandten Seite spitz zu, wobei seine höchste Erhebung in der Regel jedoch nicht über die durch die Trennkörper gebildete Trennfläche hinausragt. Vielmehr liegt die Spitze des Trennstegs hinter der durch die Trennkörper gebildeten, äußeren Trennfläche zurück. Der Trennsteg ist hierbei vorzugsweise derart zwischen zwei Trennkörper angeordnet, dass er zu diesen jeweils einen Abstand von ca. 0,15 mm bzw. kleiner aufweist.

Im Gegensatz zu herkömmlichen Trennvorrichtungen wird bei dem vorliegenden Trennmittel zum Trennen zweier Materialien ein Sinkeffekt nicht bzw. kaum ausgenutzt. Vielmehr bedient sich das Trennmittel aufgrund der vorstehend erläuterten unterschiedlichen Relativgeschwindigkeiten v_{Tx} und v_{Lx} des Effektes, dass wenigstens ein Material von einem umlaufenden Trennkörper mitgerissen wird und ein bis zu diesem Zeitpunkt an diesem Material anhaftendes weiteres Material in dem Trägermedium zurückbleibt.

Der zwischen zwei Trennkörpern angeordnete Trennsteg ist hierbei derart ausgebildet, dass er den Spaltquerschnitt in der Regel nicht mindert, so dass selbst bei einem im Trennspalt vorhandenen Trennsteg der gleiche Spaltquerschnitt vorliegt als bei einem Trennspalt ohne einen solchen Trennsteg.

Der Vollständigkeit halber sei noch erwähnt, dass die Merkmale hinsichtlich des Trennsteges unabhängig von den übrigen Merkmalen der Erfindung erfinderisch sind.

Um den Lauf der umlaufenden Trennkörper insbesondere im Bereich der Trennfläche zu stabilisieren und hierdurch eine weitere Erhöhung der Trennschärfe zu erzielen, ist es vorteilhaft, wenn das Trennmittel eine, vorzugsweise stationäre, Einrichtung zum Führen der Trennkörper aufweist, die vorzugsweise unmittelbar unterhalb der die Trennfläche bildenden Trennkörper angeordnet sind.

Da mittels der Führungseinrichtung eine gewünschte Spaltbreite über die gesamte Länge der Trennfläche wesentlich besser eingehalten wird, kann vorteilhafter Weise eine übermäßige Spaltverengung bzw. Spalterweiterung weitgehend ausgeschlossen werden. Vorzugsweise ist die Einrichtung zum Führen als starre Führung ausgebildet.

Darüber hinaus wird durch das Führen der Trennkörper unmittelbar unter der Trennfläche einem Verdrillen der Trennkörper entgegengewirkt. Hierdurch wird die Betriebssicherheit der Trennvorrichtung weiter erhöht, da die Gefahr verringert ist, dass aufgrund eines zu starken Verdrillens ein Trennkörper frühzeitig Schaden nimmt.

Um eine über die Trennfläche möglichst stabile Führung zu erhalten, ist es vorteilhaft, wenn die Führungseinrichtung in Bewegungsrichtung der Trennkörper konvex ist.

Mittels der konvex ausgebildeten Führungseinrichtung haben die Trennkörper eine Erhebung, so dass sich insbesondere ein Suspensionsgemenge von dem Zuführbereich des Suspensionsgemenges bis vor einen Scheitelpunkt der konvexen Trennfläche sammelt und in diesem Bereich eine Art See bildet. Insbesondere wird hierbei erreicht, dass sich das Trägermedium unmittelbar hinter dem Ort des Aufbringens des Suspensionsgemisches auf der Trennfläche ansammelt. Hierbei wird die Trägermediumstiefe derart eingestellt, dass sich im Suspensionsgemenge befindliche Leichtstoffe unmittelbar nach dem Aufbringen auf die Trennfläche von den umlaufenden Trennkörpern erfasst werden und hierbei mitgerissen werden, wobei die an ihnen noch haftenden faserartigen Gebilde aufgrund von Reibung gegenüber dem Trägermedium in diesem zurückbleiben.

Die so beschleunigten Leichtstoffe werden aus der Trägermediumsansammlung über den Scheitelpunkt der Trennfläche hinaus bewegt und können gegebenenfalls auf der Trennfläche hinter dem Scheitelpunkt geklaubt werden.

Die vorstehend beschriebene Seebildung bzw. Ansammlung des Trägermediums kann ebenfalls erreicht werden, wenn die Trennfläche an der dem Suspensionsgemenge zugewandten Seite ansteigt. In diesem Fall kann auf eine gewölbte Trennfläche verzichtet werden.

Der Begriff "Suspensionsgemenge" umfasst hierbei in ein flüssiges Trägermedium gebrachte Leichtstoffe, an welchen faserartige Gebilde anhaften. Vorzugsweise weist hierbei das Suspensionsgemenge eine Dichte von ca. 5 kg/m² auf. Als Trägermedium eignet sich besonders Wasser, da dieses relativ kostengünstig zur Verfügung steht und nach einen Gebrauch einfach aufbereitet und gegebenenfalls mehrfach wiederverwendet werden kann.

Unter dem Begriff "faserartige Gebilde" versteht man im vorliegenden Fall hauptsächlich Fasern aus einem Zellstoff. Beispielsweise sind die faserartigen Gebilde Papierfasern, die an einem Klebeband anhaften, wie es beispielsweise zum Verschließen einer Verpackung verwendet wird.

Um einem Verdrillen und/oder Verlagern der umlaufenden Trennkörper auch im Bereich der Umlenkung entgegenzuwirken, ist es vorteilhaft, wenn das Trennmittel Umlenkwalzen aufweist, deren Oberflächen glatt sind. Beispielsweise ist die Oberfläche der Umlenkwalzen poliert. Im Sinne der Erfindung umfasst der Begriff "glatt" insbesondere Oberflächen, die eine Art spiralförmige durch ein spanabhebendes Drehen bedingte Struktur in Längsrichtung um die Rotationsachse einer Umlenkwalze nicht aufweisen.

Eine alternative bzw. kumulative Ausführungsvariante hinsichtlich der Umlenkwalzen sieht vor, dass die Umlenkwalzen Führungsnuten für die Trennkörper aufweisen. Hierdurch lässt sich eine Seitenführung der Trennkörper erreichen, die ansonsten alternativ bzw. kumulativ noch durch separate Führungseinrichtungen realisiert werden kann.

Die Merkmale bezüglich der Trennkörperführung, den Anstieg der Trennfläche, des Mitreißeffektes, der Trennstege sowie der Oberfläche der Umlenkwalzen sind jeweils für sich auch unabhängig von den übrigen Merkmalen der Erfindung erfinderisch.

Um ein Verschmutzen der Trennkörper aufgrund verunreinigter Umlenkwalzen zu verhindern, ist es vorteilhaft, wenn das Trennmittel eine Walzenreinigungseinrichtung aufweist.

Die Aufgabe der Erfindung wird darüber hinaus zum einen gelöst von einem Verfahren zum Trennen von Leichtstoffen, bei welchem die Leichtstoffe zum Selektieren einem Selektor zugeführt, und die Leichtstoffe in einem flüssigen Trägermedium geführt werden.

Unter dem Begriff "Leichtstoffe" versteht man im Sinne der Erfindung vorzugsweise diejenigen Bestandteile aus zu entsorgendem Haushalts- und Gewerbemüll, Bestandteile aus Entsorgungssystemen, wie beispielsweise dem dualen System und/oder Papiere, die allesamt eine Dichte δ von unter 5,0 g/cm², vorzugsweise von unter 2,0 g/cm² aufweisen. Bei dem hier zugrunde gelegten Dichtewert bleiben geringe Verschmutzungen unberücksichtigt, die eine höhere Dichte aufweisen und die weniger als 20 Gew.-%, vorzugsweise von weniger als 10 Gew.-%, des jeweiligen Massestroms ausmachen bzw. durch Reinigen auf einen dieser Werte gebracht werden können.

Besonders vorteilhaft ist es, dass die Leichtstoffe bei dieser Verfahrensführung bzw. bei einer entsprechenden Vorrichtung durch das flüssige Trägermedium auf einer besonders ruhigen und damit zum Selektieren günstigen Art und Weise vereinzelt werden. Auf den eigentlichen Selektiervorgang wirkt sich das flüssige Trägermedium nicht weiter negativ aus, vielmehr begünstigt das flüssige Trägermedium das zum Selektieren erforderliche Ruhigstellen der zu selektierenden Leichtstoffe.

Es ist möglich, dass das flüssige Trägermedium flacher als der durchschnittliche größte Durchmesser der Leichtstoffe ist. Auf diese Weise kann ein hoher Vereinzelungsgrad erzielt werden, der die Selektivität des Gesamtverfahrens erhöht. Darüber hinaus behindert dann das flüssige Trägermedium ein Entfernen eines Leichtstoffes nur unwesentlich und führt die Stoffe dennoch ausreichend in seinem Trägermediumstrom.

Zum anderem wird die Aufgabe der Erfindung von einem Verfahren zum Trennen von Leichtstoffen gelöst, bei welchem die Leichtstoffe zum Selektieren einer Auftragsfläche zugeführt werden, wobei ein impulsbehaftetes Medium die Auftragsfläche wenigstens in Teilbereichen temporär durchstößt.

Es ist bekannt impulsbehaftete Medien zum Selektieren von Materialien einzusetzen. Oft wird hierbei Druckluft verwendet, aber auch mit einem Druck beaufschlagte Flüssigkeiten kommen zur Anwendung. Zum Beispiel ist in der Fachzeitschrift ZKG International, No. 6, 2000, Vol. 53 in dem Beitrag "Optische Sortierung von grobstückigem Material" ein Auswerfverfahren für grobkörniges Material beschrieben, in welchem massive Materialstücke nach einem Ablösen von einer Gurtbandtrommel mit einem Druckwasser selektiert werden. Nachteilig hierbei ist jedoch, dass die Dichten von dem Druckwasser und dem zu selektierenden Material eine relativ große Differenz zueinander aufweisen. Demzufolge kann das Material, insbesondere ein grobstückiges Material, nur relativ gering ausgelenkt werden, so dass hierdurch die Grenzen des Selektierverfahren deutlich zum Vorschein

Deshalb ist vorgeschlagen, dass die Dichten des impulsbehafteten Mediums und dem zu selektierenden Material, im vorliegenden Fall gegenüber dem Leichtstoff, in einem Verhältnis von maximal 1/2 zueinander stehen. Hierdurch ist das impulsbehaftete Medium in der Lage, die Leichtstoffe, auch bei relativ geringer innewohnender Energie bzw. geringer Einwirkdauer genügend weit auszulenken, so dass eine hohe Selektierqualität hinsichtlich der Leichtstoffe gewährleistet ist. Falls die Dichte eines zu selektierenden Materials und die Dichte eines impulsbehaften Medium zu stark voneinander abweichen, kann dem impulsbehafteten Medium ein Füllstoff zugesetzt werden, der die Dichte des impulsbehafteten Medium erhöht. Insbesondere, wenn es sich bei dem impulsbehafteten Medium um Wasser handelt, kann dem Wasser beispielsweise Kaolin beigegeben werden. Die Menge an Kaolin kann soweit erhöht werden, bis sich das bevorzugte Dichteverhältnis von unter 1/2 einstellt. Beispielsweise ist ein Beimengen eines Füllstoffes bei Leichtstoffe mit einer Verschmutzung bzw. bei Verschmutzungen eines Massestroms von Vorteil, wenn die Dichte der verschmutzten Leichtstoffe oder des Verschmutzungen im Massestrom über 20 Gew.-% des jeweiligen Massestroms liegt.

Um das hier vorliegende Verfahren möglichst einfach durchzuführen sowie eine Vorrichtung zum Durchführen des Verfahrens baulich besonders einfach zu gestalten, sind das Trägermedium und das impulsbehaftete Medium vorzugsweise identisch. Beispielsweise wird zum Bereitstellen beider Medien eine Flüssigkeit, vorzugsweise Wasser, verwendet.

Als "Auftragsfläche" wird hierbei jede Einrichtung und/oder jede Vorrichtung verstanden, die ähnlich wie die schon erläuterte Trennfläche dazu geeignet sind, ein Material wenigstens über eine gewisse Distanz auf ihrer Oberfläche zu führen. Die Auftragsfläche ist hierbei, die einem Material zugewandte Seite einer Einrichtung und/oder einer Vorrichtung. Die dem Material zugewandte Seite ist beispielsweise die Oberfläche eines Förderbandes, auf welcher zum Beispiel ein Schüttgut zum Befördern gelagert ist.

Erfindungsgemäß ist es demnach möglich, dass Leichtstoffe, die beispielsweise horizontal auf der Auftragsfläche geführt werden, gleichzeitig von einem impulsbehafteten Medium selektiert werden, welches durch die Auftragsfläche hindurch "geschossen" wird. Besonders vorteilhaft ist es hierbei, dass die Auftragsfläche nahezu beliebig lang ausgebildet werden kann, so dass die Leichtstoffe unter anderem genügend lange auf der Auftragsfläche verweilen können, bis sie derart auf der Auftragsfläche ruhen, dass sie problemlos von einem impulsbehafteten Medium selektiert werden können. Die Möglichkeit, die Auftragsfläche nahezu beliebig lang zu gestalten, gestattet es kumulativ bzw. alternativ, mehrere Düsen zum Senden bzw. zum Bereitstellen des impulsbehafteten Mediums in Transportrichtung innerhalb der Auftragsfläche hintereinander anzuordnen. Hierdurch bleibt selbst bei einer hohen Geschwindigkeit der Leichtstoffe genügend Zeit, die unterschiedlich Leichtstoffe zeit- bzw. ortsversetzt von der bzw. innerhalb der Auftragsfläche zu selektieren.

Darüber hinaus ermöglicht diese hohe Geschwindigkeit, die Leichtstoffe durch einen nur geringen Impuls hinter der Auftragsfläche derart abzulenken bzw. von der Auftragsfläche derart abzuheben, dass die Leichtstoffe auf Grund ihrer hohen Geschwindigkeit nach dem Verlassen der Auftragsfläche zu verschieden Orten selektiert werden können.

Auch können auf diese Weise mehrere Klaub- bzw. Selektionsschritte nacheinander durchgeführt werden. Insbesondere ist es möglich, dass in einem Bereich eine Erkennung durchgeführt wird, die dann in mehreren Selektionsschritten umgesetzt wird. So können beispielsweise an einer Stelle eine Farberkennung vorgenommen und nacheinander die verschiedenen Farben aus dem Massestrom herausselektiert werden.

Besonders vorteilhaft ist es, wenn die Leichtstoffe der Auftragsfläche mittels eines flüssigen Trägermediums zugeführt werden. Durch ein flüssiges Trägermedium lassen sich, wie eingangs schon geschildert, ähnliche Vereinzelungseffekte, ggf. sogar noch wirkungsvollere Vereinzelungseffekte, erzielen, wie dieses mit Luft als Trägermedium der Fall ist. Darüber hinaus gewährleistet eine Flüssigkeit als Trägermedium einen wesentlich gleichmäßigeren zuverlässigeren Transport der Partikel in dem Medium, wodurch unter anderem eine Sensorik und ein Selektor in ihrer Zuverlässigkeit gesteigert werden bzw. eine Vereinzelung zur Verteilung auf der Auftragsfläche verbessert wird. So lassen sich wesentlich zuverlässigere Wegstrecken beherrschen, die ein Leichtstoff auf einer Auftragsfläche bzw. bis zur Auftragsfläche zurücklegt, so dass unter anderem auch ein zu selektierender Leichtstoff zuverlässiger durch das impulsbehaftete Medium selektiert werden kann bzw. zuverlässig auf der Auftragsfläche verbleibt.

Es ist vorteilhaft, wenn das impulsbehaftete Medium kontinuierlich gefördert wird, um Beschleunigungs- und Verzögerungszeiten des impulsbehafteten Mediums möglichst gering zu halten, bzw. nahezu vollständig zu vermeiden.

Um beispielsweise das flüssige Trägermedium und/oder die Auftragsfläche hierbei jedoch nicht ununterbrochen mit dem impulsbehafteten Medium zu beaufschlagen, ist es vorteilhaft, wenn das impulsbehaftete Medium zumindest temporär von dem flüssigen Trägermedium und/oder von der Auftragsfläche weggeleitet wird.

Damit das impulsbehaftete Medium möglichst rasch an den zu selektierenden Leichtstoff heran geführt werden kann, ist es vorteilhaft, wenn das impulsbehaftete Medium vor einem flüssigen Trägermedium und/oder vor einer Auftragsfläche, vorzugsweise auf einer der Auftragsfläche abgewandten Seite, moduliert wird.

Es versteht sich, dass die Merkmale hinsichtlich des kontinuierlichen Fördems des impulsbehafteten Mediums, des temporären Wegleitens des impulsbehafteten Mediums sowie des Modulierens des impulsbehafteten Mediums auch jeweils für sich und unabhängig von den übrigen Merkmalen der Erfindung vorteilhaft sind.

Eine Verfahrensvariante sieht vor, dass bunte, farbige Leichtstoffe in einen Oberlauf hinein befördert werden. Beispielsweise werden die bunten, farbigen Leichtstoffe von dem impulsbehafteten Medium aus einer Düse unterhalb des flüssigen Trägermediums und/oder der Auftragsfläche herausgeschossen, so dass sie hierbei in einen Oberlauf gefördert werden und beispielsweise für eine weitere Verarbeitung zur Verfügung stehen.

Es ist alternativ bzw. kumulativ vorteilhaft, wenn dementsprechend transparente Leichtstoffe in einen Unterlauf befördert werden. Dies ist vorteilhaft, da transparente Leichtstoffe schwerer mittels einer Sensorik zu erfassen sind. Somit ist es vorteilhaft diese einfach in einen Unterlauf fallen zu lassen, um sie dann ggf. einem weiterführenden Verfahren zuzuführen. Diese Verfahrensführung kann selbstredend variiert werden.

Um die Leichtstoffe zu identifizieren, ist es vorteilhaft, wenn die Leichtstoffe gescannt werden. Besonders effektiv sind hierbei optische und/oder Infraroterkennungsverfahren, wobei hierbei insbesondere auch zwischen bunten bzw. farbigen Leichtstoffen und transparenten Leichtstoffen unterschieden werden kann.

Um die Effizienz des Verfahrens weiter zu steigern, wird kumulativ bzw. alternativ vorgeschlagen, dass die Leichtstoffe außerhalb der Auftragsfläche aus einem flüssigen Trägermedium heraus selektiert werden.

Insbesondere hierbei ist es vorteilhaft, wenn das Trägermedium zum Selektieren der Leichtstoffe aufgefächert bzw. flächenartig ausgeformt wird. Auf diese Weise lässt sich die vereinzelnde Wirkung des Trägermediums steigern. Hierzu werden die Leichtstoffe beispielsweise in einer Art Wasserfall weiträumig verteilt, so dass noch nicht selektierte Leichtstoffe in einer im Wesentlichen vertikalen Fallrichtung aus dem flüssigen Trägermedium heraus befördert werden können. Es versteht sich, dass die Auffächerung bzw. die flächenartige Ausformung auch unabhängig von den übrigen Merkmalen der Erfindung vorteilhaft ist.

Um insbesondere Leichtstoffe von starken Verschmutzungen zu befreien und hierdurch eine hohe Betriebssicherheit des Verfahrens möglichst sicher zu gewährleisten, ist es vorteilhaft, wenn die Leichtstoffe vorbehandelt werden. Beispielsweise werden die Leichtstoffe zuvor von an ihnen haftenden faserartigen Gebilden befreit, wobei die faserartigen Gebilde ebenfalls als Rohstoff weiter verarbeitet werden können. Beispielsweise sind die Leichtstoffe wenigstens zum Teil einem Pulpersystem entnommen worden, so dass sie insbesondere von faserartigen Gebilden möglichst befreit und vorbehandelt sind. Ebenso können die Leichtstoffe zuvor der Eingangs beschriebenen, erfindungsgemäßen Trennvorrichtung zugeführt werden.

Um insbesondere transparente Leichtstoffe, die besonders wertvoll sind und die nur schwer bzw. nahezu gar nicht von optischen Sensoren gescannt werden können, ebenfalls zu selektieren, ist es vorteilhaft, wenn wenigstens ein Teil des flüssigen Trägermediums, insbesondere die transparenten Leichtstoffe, einem Mehrkorn-Verteil-Verfahren, insbesondere einem Sink-Schwimm-Trennverfahren zugeführt wird.

Die Aufgabe der Erfindung wird ebenfalls von einer Vorrichtung zum Trennen von Leichtstoffen mit einem Trägermedium gelöst, bei welcher das Trägermedium eine Flüssigkeit aufweist. Vorteilhafter Weise gelingt es unter anderem Leichtstoffe in einem flüssigen Trägermedium schneller zu beruhigen, so dass diese Leichtstoffe einfacher zu selektieren sind. Insbesondere kann in dem Trägermedium bereits eine Dichteselektion vorgenommen werden.

Die Aufgabe der Erfindung wird des Weiteren von einer Vorrichtung zum Trennen von Leichtstoffen mit einem eine Auftragsfläche umfassenden Selektor gelöst, wobei ein Mittel zum Senden eines impulsbehafteten Mediums derart bezüglich der Auftragsfläche angeordnet ist, dass das impulsbehaftete Medium zum Selektieren innerhalb der Auftragsfläche anordenbar ist bzw. dass es die Auftragsfläche durchstoßen kann. Insbesondere auf eine Auftragsfläche aufgebrachte Leichtstoffe lassen sich vorteilhafter Weise von einer entsprechenden Sensorik besonders einfach erfassen, da sie mit einer gleichbleibenden Geschwindigkeit entlang einer horizontalen Bahn nahezu unbegrenzt weit geführt werden können.

Es versteht sich, dass hierbei die Auftragsfläche entlang der horizontalen Bahn nicht ausschließlich linear, sondern gegebenenfalls entlang einer gekrümmten Bahn verlaufen kann, um hierbei die Auftragsfläche platzsparend zu vergrößern. Ebenso ist es hierzu möglich, mehrere Auftragsfläche übereinander anzuordnen.

Um die Leichtstoffe beispielsweise besonders einfach selektieren zu können, ist es vorteilhaft, wenn die Auftragsfläche materialfreie Bereiche aufweist. Mittels dieser materialfreien Bereiche der Auftragsfläche ist es möglich, ein impulsbehaftetes Medium zumindest temporär derart durch die Auftragsfläche durchzusenden, dass dieses einen Leichtstoff zuverlässig selektieren kann.

Gemäß einer bevorzugten Ausführungsvariante wird vorgeschlagen, dass die Auftragsfläche ein Endlosriemenband aufweist. Mittels eines Endlosriemenbandes lässt sich auf einfache Art und Weise und damit sehr kostengünstig eine eingangs schon beschriebene Auftragsfläche bzw. Trennfläche realisieren. Da ein Endlosriemenband aus mehreren nebeneinander, beabstandet angeordneten Einzelriemen bestehen können, kann hierdurch eine Auftragsfläche im Sinne der Erfindung einfach realisiert werden. Andererseits kann auch ein einziger Endlosriemen, wie hinsichtlich der Trennfläche schon erläutert, mehrfach parallel geführt und an eine Rückführseite wieder zurückgeführt werden. Vorzugsweise kann bei der Rückführung eine Reinigung erfolgen, sodass der Endlosriemen einfach und sehr vollständig gereinigt werden kann.

Es versteht sich, dass anstelle eines Endlosriemenbandes auch jede andere technische Einrichtung zum Realisieren der Auftragsfläche herangezogen werden kann, die im Sinne der Erfindung materialfreie Bereiche umfasst. Beispielsweise sind dies auch voneinander beabstandete Walzen oder Bleche wie auch eine Vielzahl zueinander angeordneter Drähte.

Die Aufgabe der Erfindung wird ebenfalls von einer Vorrichtung zum Trennen von Leichtstoffen mit einem Selektor und wenigstens eine trägermediumsauffächernde Einrichtung gelöst, wobei mit der trägermediumsauffächernden Einrichtung ein flüssiges Trägermedium in Art eines Wasserfalls bzw. eines Wasserfilms aufgefächert bzw. flächenartig ausgeformt wird.

Um beispielsweise die Leichtstoffe besonders vorteilhaft auf der Auftragsfläche vereinzeln bzw. in einem flüssigen Trägermedium angeordnete Leichtstoffe besonders vorteilhaft vereinzeln und hierdurch besonders effektiv selektieren zu können, ist es vorteilhaft, wenn die trägermediumauffächernde Einrichtung vor der Auftragsfläche und/oder hinter der Auftragsfläche angeordnet ist. Insbesondere das Anordnen der trägermediumauffächernden Einrichtung vor der Auftragsfläche ermöglicht eine besonders gute Vereinzelung der Leichtstoffe im Bereich der Auftragsfläche, wobei dagegen die trägermediumauffächernde Einrichtung hinter der Auftragsfläche vorzugsweise noch nicht von der Auftragsfläche selektierte Leichtstoffe nochmals weitergehend vereinzeln kann, so dass hierdurch in einer Art Wasserfall eine weitere Selektion mit beispielsweise einem impulsbehafteten Medium durchgeführt werden kann.

Es versteht sich, dass zur Auffächerung bzw. zur flächenartigen Ausformung des flüssigen Trägermediums unterschiedliche Einrichtungen, wie etwa ein Überlauf, geeignet sein können. Als vorteilhaft hat es sich ergeben, wenn die trägermediumauffächernde Einrichtung wenigstens eine Fächerdüse aufweist.

Eine besonders günstige Auffächerung des flüssigen Trägermediums ergibt sich, wenn die Fächerdüse hinter ihrer Austrittsöffnung einen flächenartigen Bereich aufweist, der von einem konkav ausgebildeten Bereich in einen konvex ausgebildeten Bereich übergeht.

Es wurde gefunden, dass sich das flüssige Trägermedium und/oder die in Suspension vorliegenden Fäden besonders günstig auffächern lassen, wenn der Radius des konvex ausgebildeten Bereichs einen Wert über 1 mm, vorzugsweise einen Wert von über 2 mm, aufweist.

Hierdurch kann das auf den flächenartig ausgebildeten Bereich auftreffende flüssige Trägermedium derart gelenkt werden, dass der konvex gekrümmte Bereich mit dem flüssigen Trägermedium benetzt und hierdurch besonders vorteilhaft aufgefächert wird.

Die vorhergehend beschriebene Fächerdüse eignet sich nicht nur zum Auffächern eines flüssigen Trägermediums, sondern auch zum Selektieren von unterschiedlich langen faserartigen Gebilden. Beispielsweise kann die Fächerdüse in einer Sprühfraktionierung zum Einsatz kommen. Eine Sprühfraktionierung dient beispielsweise dazu, unterschiedlich lange Fasern voneinander zu trennen, so dass längere Fasern von kürzeren Fasern getrennt werden können und jeweils als getrennter Rohstoff zur Weiterverarbeitung zur Verfügung steht.

Eine derartige Fächerdüse kann unabhängig von den übrigen Merkmalen vorliegender Erfindung vorteilhaft genutzt werden und kann sowohl lediglich zur Auffächerung einer Flüssigkeit als auch zur Vereinzelung eines Suspensionsgemenges zur Anwendung kommen. Unter dem Begriff "lange Faser" ist im Sinne der Erfindung ein faserartiges Gebilde gemeint, welches eine Faserlänge über einer definierten Faserlänge, beispielsweise eine Länge von mehr als 1,5 mm, vorzugsweise eine Länge von mehr als 2,0 mm, aufweist. Dementsprechend ist im Sinne der Erfindung unter der Bezeichnung "kurze Faser" ein faserartiges Gebilde gemeint, dessen Faserlänge unter der definierten Faserlänge liegt.

Um eine Fasertrennung der vorstehend beschriebenen Fasern weitestgehend automatisiert problemlos durchführen zu können, ist es vorteilhaft, wenn die Fasern in einer Suspension gelöst auf eine löchrige Grundfläche bzw. Spalten aufweisende Trennfläche gesprüht werden. Hierzu eignet sich insbesondere ein umlaufendes Siebband bzw. ein zu Anfang schon beschriebenes umlaufendes Endlosriemenband, so dass die Fächerdüsen die gelösten Fasern nicht nur auf ein und die selbe Stelle der Grundfläche aufträgt, sondern dass sich vielmehr einer Fächerdüse gegenüber eine wechselnde Grundfläche kontinuierlich anordnet.

Hierbei sind die Öffnungen der Grundfläche beispielsweise in ihrer Dimension derart gewählt, dass durch die Öffnungen Fasern mit einer geringeren Länge hindurchgespült werden können, wobei jedoch die längeren Fasern auf der Oberfläche der Grundfläche bzw. des umlaufenden Siebbandes als eine Art Oberkorn verbleiben. Hierbei werden die langen Fasern als Oberkorn auf der Oberseite angehäuft und die kurzen Fasern werden als Unterkorn in einer Sammeleinrichtung vorzugsweise unterhalb aufgefangen. Insbesondere erfolgt das Anhäufen auch aufgrund des Flüssigkeitsimpulses selbst.

Um ein Anhäufen des Oberkorns, also der langen Fasern, auf der Oberseite, also der den Fächerdüsen zugewandten Seite, zu verhindern und hierdurch einer Gefahr des Zusetzens Öffnungen zu verringern bzw. gänzlich auszuschließen, eignen sich die erwähnten Fächerdüsen besonders gut. Mit Hilfe der Fächerdüsen werden die gelösten Fasern derart aufgebracht, dass sie unter anderem durch die fortwährend nachströmende Suspension aus gelösten Fasern oder anderer Partikel von einer Mittellage auf der Trennfläche automatisch in eine äußere Randlage geführt werden. Hierdurch ist unter anderem sichergestellt, dass insbesondere die mittlere Fläche fortwährend freigespült wird, so dass nachfolgende kurze Fasern durch die Löcher des Siebbandes gelangen können, ohne eventuell von den die Löcher verstopfenden langen Fasern daran gehindert zu werden.

Vorteilhaft ist es, dass insbesondere auf der den Fächerdüsen zugewandten Seite an den seitlichen Rändern Schiebeeinrichtungen angeordnet sind, die in Art eines Wischers die in die Seitenbereiche gelangten Mengen an langen Fasern von der Oberfläche abgreifen. Auf diese Weise werden insbesondere die Seitenbereiche immerwährend gereinigt, so dass neue Langfasern problemlos nachrücken können. Die Abstreifeinrichtungen sind hierbei derart ausgelegt, dass sie die langen von der Oberfläche abgestreiften Fasern einer entsprechenden Auffangeinrichtung zuführen.

Besonders vorteilhaft ist es, wenn die Sprühfraktionierung Schiebeleisten umfasst, die gegenüber dem umlaufenden Siebband bzw. den umlaufenden Trennkörpern eine Relativgeschwindigkeit aufweisen. Mittels dieser Schiebeleisten wird beispielsweise fortwährend die Oberseite und/oder die Unterseite des umlaufenden Siebbandes kontinuierlich bzw. der Trennkörper abgestreift. Beispielsweise werden hierzu die Schiebeleisten mit einer höheren Geschwindigkeit geführt als das Siebband bzw. die Trennkörper an sich. Ebenso können die Schiebeleisten stationär gehalten bzw. gegenläufig zu dem Siebband bzw. den Trennkörpern geführt werden.

Besonders vorteilhaft ist es, wenn der Auftreffwinkel der Suspension sowie der darin gelösten faserartigen Gebilde hinsichtlich des Siebbandes einen maximalen Auftreffwinkel von 90 ° aufweist.

Um die Sprühfraktionierung baulich möglichst kompakt zu realisieren, ist es vorteilhaft, wenn eine Vielzahl von Siebbändern bzw. Endlosriemenbändem übereinander angeordnet wird. Es versteht sich, dass die Sprühfraktionierung hierbei derartig ausgebildet sein kann, dass mehrere einzelne Siebbänder bzw. Riemenbänder übereinander angeordnet werden oder ein einzelnes Siebband bzw. Riemenband entsprechend mittels Umlenkeinrichtungen derart umgelenkt wird, dass sich mehrere Ebenen durch ein einziges Siebband bzw. einen einzige Riemen realisieren lassen.

Bei mehreren übereinander angeordneten Siebband- bzw. Riemenbandbereichen ist es sinnvoll, wenn jeder Bereich für die jeweils getrennten faserartigen Gebilde eine separate Auffangeinrichtung aufweist.

Es versteht sich, dass eine derartige Anordnung von Düsen auch unabhängig von den übrigen Merkmalen vorliegender Erfindung vorteilhaft ist und beispielsweise auch über einem Endlosriemenband oder sonstiger Auftragsflächen realisiert werden kann.

Um die Leichtstoffe gut vereinzelt auf eine Auftragsfläche aufbringen zu können, ist es vorteilhaft, wenn wenigstens eine Fächerdüse auf eine Auftragsfläche gerichtet ist.

Eine Vorrichtungsvariante sieht vor, dass der Selektor wenigstens eine Strahldüse aufweist, welche auf die Auftragsfläche gerichtet ist. Vorzugsweise ist die Strahldüse auf die materialfreien Bereiche der Auftragsfläche gerichtet, so dass das impulsbehaftete Medium die Auftragsfläche durchdringen und hierbei einen Leichtstoff selektiert werden kann.

Die Leichtstoffe können besonders gut selektiert werden, wenn wenigstens eine der Strahldüsen unterhalb der Auftragsfläche auf einer der Auftragsfläche abgewandten Seite angeordnet ist.

Nach der Erfindung ist vorgeschlagen, dass wenigstens eine der Strahldüsen eine Luftdüse und/oder eine Wasserdüse ist. Jedoch sind nach Möglichkeit den Luftdüsen die Wasserdüsen vorzuziehen, da die Luftdüsen insbesondere sehr große Luftmengen zum "Wegschießen" von Leichtstoffen benötigen und sich die Luft weniger gut bündeln lässt und schneller wieder auseinander teilt. Eine Flüssigkeit hingegen kann beispielsweise ein Vielfaches mehr an Energie aufweisen und bleibt insgesamt länger als eng gebündelter Strahl zusammen. Vorzugsweise eignet sich Wasser, da dieses ohnehin bei gängigen Trenneinrichtungen zur Anwendung kommt.

Es versteht sich, dass statt der Düsen auch andere Mittel zum Entfernen von Leichtstoffen aus dem Trägermedium vorgesehen sein können. Dies können beispielsweise mechanische Vorrichtungen oder magnetische, elektrische oder elektrostatische Anordnungen sein.

Um beispielsweise Reaktionszeiten insbesondere beim Beschleunigen oder beim Verzögern eines impulsbehafteten Mediums zu verringern, ist es vorteilhaft, wenn die Trennvorrichtung eine Umlenkeinrichtung für ein impulsbehaftetes Medium aufweist, und die Umlenkeinrichtung zwischen den Strahldüsen und einem flüssigen Trägermedium und/oder einer Auftragsfläche angeordnet ist. Hierdurch wird es ermöglicht, dass unter anderem durch eine Wasserdüse kontinuierlich Wasser strömen kann.

Wird das impulsbehaftete Medium dieser Wasserdüse zur Zeit nicht benötigt, um einen Leichtstoff zu selektieren, kann bei einer derartigen Anwendung lediglich eine Umlenkeinrichtung zwischen der Wasserdüse und dem flüssigen Trägermedium und/oder der Auftragsfläche gebracht werden, wobei der Wasserstrahl entsprechend abgelenkt wird.

Besonders vorteilhaft ist es, wenn die Umlenkeinrichtung mit einer Sensoreinrichtung eine Wirkverbindung aufweist, durch welche vorzugsweise die Leichtstoffe erfasst werden. Die Sensoreinrichtung kann hierbei entsprechende Signale eines erfassten Leichtstoffes mittelbar oder unmittelbar an die Umlenkeinrichtung übermitteln, so dass die Umlenkeinrichtung das impulsbehaftete Medium einer Strahldüse umlenkt bzw. nicht umlenkt.

Vorteilhaft ist es, wenn die Sensoreinrichtung optische und/oder Infrarotsensoren aufweist. Beispielsweise ist es ohne Weiteres möglich, wenigstens einen optischen Sensor, welcher vorzugsweise linienartig ausgeführt ist, über eine flächenartig ausgeformte Flüssigkeit und/oder einer flächenartig ausgeformten Auftragsfläche zu erstrecken und hierdurch die Leichtstoffe zu erfassen.

Es versteht sich, dass die Sensoreinrichtung beispielsweise auch magnetische, elektrische, akustische Sensoren und Ultraschallsensoren zum Erfassen der einzelnen Leichtstoffe aufweisen kann.

Die Vorrichtung kann baulich besonders einfach realisiert werden, wenn das flüssige Trägermedium und das impulsbehaftete Medium identisch sind. Beispielsweise braucht hierzu nur ein Flüssigkeitstank sowie eine Umwälzpumpe zum Betrieb der Vorrichtung zum Trennen von Leichtstoffen eingesetzt werden.

Weitere Ziele, Vorteile und Eigenschaften der vorliegenden Erfindung werden anhand der Beschreibung anliegender Zeichnung erläutert, in welcher beispielhaft eine erfindungsgemäße Trennvorrichtung dargestellt ist.

Es zeigt
- Figur 1: schematisch eine Vorderansicht eines Überlaufs, der ein flüssiges Trägermedium zu einem Wasserfall auffächert,
- Figur 2: schematisch eine Seitenansicht des Überlaufes aus Figur 1,
- Figur 3: schematisch eine Fächerdüse als Alternative zu dem Überlauf aus den Figuren 1 und 2, um ein flüssiges Trägermedium zu einem Wasserfall aufzufächern,
- Figur 4: schematisch eine Detailansicht der Fächerdüse aus Figur 3,
- Figur 5: schematisch eine Seitenansicht einer Trennvorrichtung zum Selektieren von Leichtstoffen mit einer Auftragsfläche,
- Figur 6: eine schematische Seitenansicht einer Sprühfraktionierung mit einem umlaufenden Siebband und mehreren Siebbandetagen,
- Figur 7: eine schematische Aufsicht auf ein Siebband,
- Figur 8: eine schematische Seitenansicht eines Trennmittels mit einer konvex ausgebildeten Trennfläche,
- Figur 9: eine schematische Draufsicht auf eine Umlenkwalze mit einer glatten Oberfläche,
- Figur 10: eine schematische Draufsicht auf eine weitere Umlenkwalze mit Führungsnuten,
- Figur 11: eine schematische Ansicht einer Umlenkwalze im Zusammenspiel mit einem Trennkörper und einer Reinigungseinrichtung,
- Figur 12: einen schematischen Querschnitt eines umlaufenden Trennkörpers mit einer Führungseinrichtung und einem dazwischen angeordneten Trennsteg und
- Figur 13: eine schematische Seitenansicht eines Pulpers.

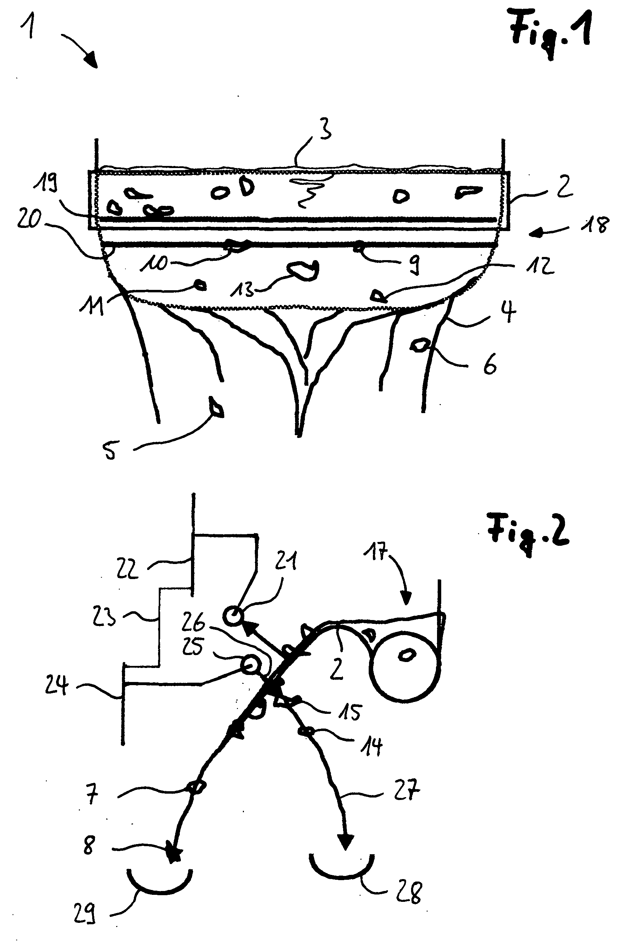

Der in Figur 1 gezeigte Überlauf 1 fächert an einer Barriere 2 ein flüssiges Trägermedium 3 zu einem Wasserfall 4 auf. Das flüssige Trägermedium 3 bzw. der Wasserfall 4 ist vermengt mit einer Vielzahl von transparenten Leichtstoffen 5, 6, 7, 8 und nicht transparenten Leichtstoffen 9 bis 15. Die Leichtstoffe 5 bis 15 werden in einem Bereich 17 vor der Barriere 2 mit dem flüssigen Trägermedium 3 vermengt.

In einem Bereich 18, welcher durch zwei Balken 19 und 20 dargestellt ist, werden insbesondere die nicht-transparenten Leichtstoffe von einem optischen Sensor 21 einer Sensoreinrichtung 22 erfasst. Die erfassten Daten hierzu werden mittels einer Wirkverbindung 23 zu einer impulsgebenden Einrichtung 24 übermittelt, wobei Strahldüsen 25 ein impulsbehaftetes Medium 26 erzeugen, mittels dessen insbesondere die nicht-transparenten Leichtstoffe 9 bis 15 aus dem flüssigen Trägermedium 3 gemäß Pfeilrichtung 27 in eine Auffangeinrichtung 28 herausgeschlossen werden. Die nicht durch das impulsbehaftete Medium 26 herausgeschossenen transparenten Leichtstoffe 5 bis 8 strömen mit dem flüssigen Trägermedium weiter und werden in einer Auffangeinrichtung 29 aufgefangen. Es versteht sich, dass diese Anordnung auch zur Trennung anderer Materialien bei entsprechender Sensorik genutzt werden kann.

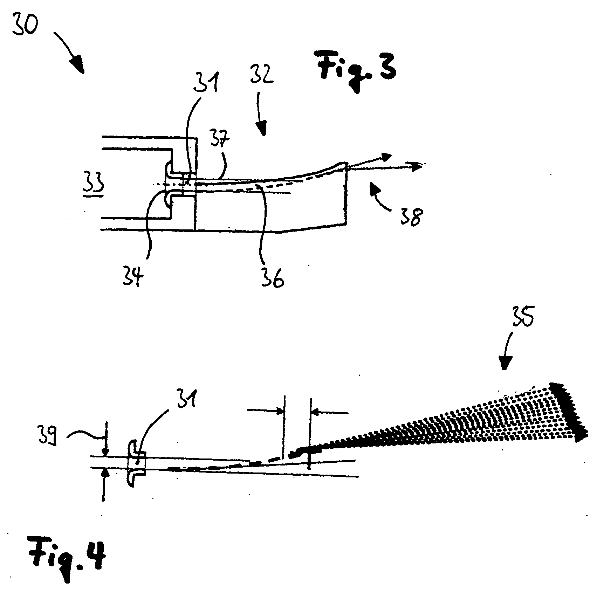

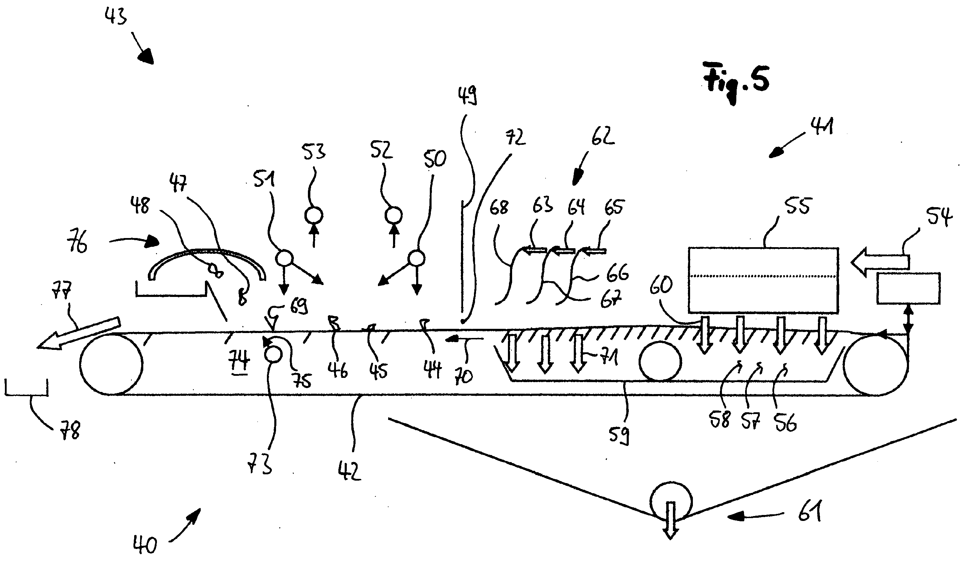

Das in den Figuren 3 und 4 gezeigte Ausführungsbeispiel einer Fächerdüse 30 hat hinter einer Austrittsöffnung 31 einen flächenartigen Bereich 32. Die Austrittsöffnung 31 weist zu einem Suspensionszulauf 33 hin eine polierte, abgerundete Einlaufkante 34 auf. Dies wirkt sich insbesondere positiv auf die Auffächerung 35 des Suspensionsmittels aus. Der flächenartige Bereich 32 ist hierbei überwiegend konkav ausgebildet, wobei er im Bereich der Austrittsöffnung 31 um weniger als 20° gegenüber der Strahlrichtung geneigt ist und wobei er in seinen seitlichen Begrenzungen in einen konvex ausgebildeten Bereich 36 übergeht. Der Radius des konvex ausgebildeten Bereichs 36 hat einen Wert von 2 mm, wobei zwischen dem konkav ausgebildeten Innenbereich des flächenartigen Bereiches 32 und dem konvex ausgebildete äußeren Bereich 36 des flächenartigen Bereiches 32 ein Strahlwendepunkt gebildet wird, der zur Ablenkung der Strömungsrichtung 37 durch Adhäsion und Kohäsion eine optimale Strahlvereinzelung 38 bedingt. Die Austrittsöffnung 31 kann insbesondere einen maximalen Durchmesser 39 von 6 mm aufweisen, wobei die Fächerdüse 30 in diesem Ausführungsbeispiel eine Austrittsöffnung 31 von 4,5 mm Durchmesser aufweist.

Die in Figur 5 dargestellte Trennvorrichtung 40 umfasst einen Nassbereich 41 zum Abtrennen von Freifasern aus einem Suspensionsgemenge bei gleichzeitigen Verteilen der übrigen Leichtstoffe 44, 45, 46, 47 und 48 auf einem Endlosriemenband 42 der Trennvorrichtung 40, sowie einen Selektor 43, welcher mit einer Nahinfrarottechnik zum Selektieren von Leichtstoffen 44, 45, 46, 47 und 48 ausgestattet ist. Der Nassbereich 41 und der Selektor 43 sind durch einen Spritzschutz 49 voneinander getrennt, so dass insbesondere empfindliche Komponenten der Nahinfrarottechnik wie beispielsweise eine Beleuchtungseinheit 50 und 51 sowie eine Lage- und Formerkennungseinrichtung 52 und eine Materialartenerkennungseinrichtung 53 weitestgehend von Spritzwasser geschützt angeordnet sind.

Der Nassbereich 41 umfasst eine Suspensions- bzw. Leichtstoffzufuhr 54, wobei in einer Vorrichtung 55 die Leichtstoffe 44 bis 48 von an ihnen anhaftenden Freifasern 56, 57 und 58 getrennt und die Freifasern über eine Auffangvorrichtung 59 entlang der Pfeile 60 (hier nur exemplarisch dargestellt) durch das Endlosriemenband hindurch zu einen Freifaserstoffaustrag 61 geleitet werden. Unmittelbar vor dem Spritzschutz 49 befindet sich eine trägermediumauffächernde Einrichtung 62, die drei Fächerdüsen 63, 64 und 65 aufweist. Die Fächerdüsen 63, 64 und 65 fächern ein flüssiges Trägermedium jeweils zu einer Art Wasserfall 66, 67 und 68 auf, wodurch die Leichtstoffe 44 bis 48 voneinander vereinzelt werden, so dass sie auf der Auftragsfläche 69 in Pfeilrichtung 70 zum Selektor 43 hin befördert, und noch anhaftende Fasern abgespült werden.

Das flüssige Trägermedium läuft gemäß den Pfeilen 71 (hier nur exemplarisch dargestellt) in die Auffangeinrichtung 59 zurück.

Die verteilten und vereinzelten Leichtstoffe 44 bis 48 gelangen über einen Zulauf 72 in den Selektor 43, in dem sie von den Beleuchtungseinrichtungen 50 und 51 ausgeleuchtet werden, so dass die Lage- und Formerkennungseinrichtung 52 sowie die Materialartenerkennungseinrichtung 53 die Leichtstoffe 44 bis 48 erfassen kann.

Im vorliegenden Ausführungsbeispiel unterscheidet die Trennvorrichtung 40 zwischen PVC-Leichtstoffen und PET-Leichtstoffen, die von einer Strahldüse 73 von einem Bereich 74 unterhalb der Auftragsfläche 69 mittels eines Wasserstrahls 75 in einen oberen Austrag 76 von der Auftragsfläche 69 des Endlosriemenbandes 42 herausgeschossen werden.

Von der Materialartenerkennungseinrichtung 53 nicht als PVC- bzw. PET-Leichtstoffe erfassten Leichtstoffe 44, 45, 46 werden weiter in Laufrichtung 70 des Endlosriemenbandes 42 gemäß Pfeilrichtung 77 in einen unteren Austrag 78 gefördert.

Es versteht sich, dass eine Vielzahl von Strahldüsen 73 hintereinander und/oder nebeneinander unter der Auftragsfläche 69 der Trennvorrichtung 40 angeordnet sein können, um beispielsweise hierdurch eine hohe Durchsatzleistung der Trennvorrichtung 40 sowie eine hohe Variabilität der Selektion zu gewährleisten.

Es versteht sich des Weiteren, dass die Trennvorrichtung 40 hinter dem Selektor 43 mit einer Nahinfrarottechnik einen weiteren Selektor 43 aufweisen kann, der beispielsweise einen vorhergehend beschriebenen Überlauf 1 aufweist, und eine weitere Selektion von Leichtstoffen ermöglicht.

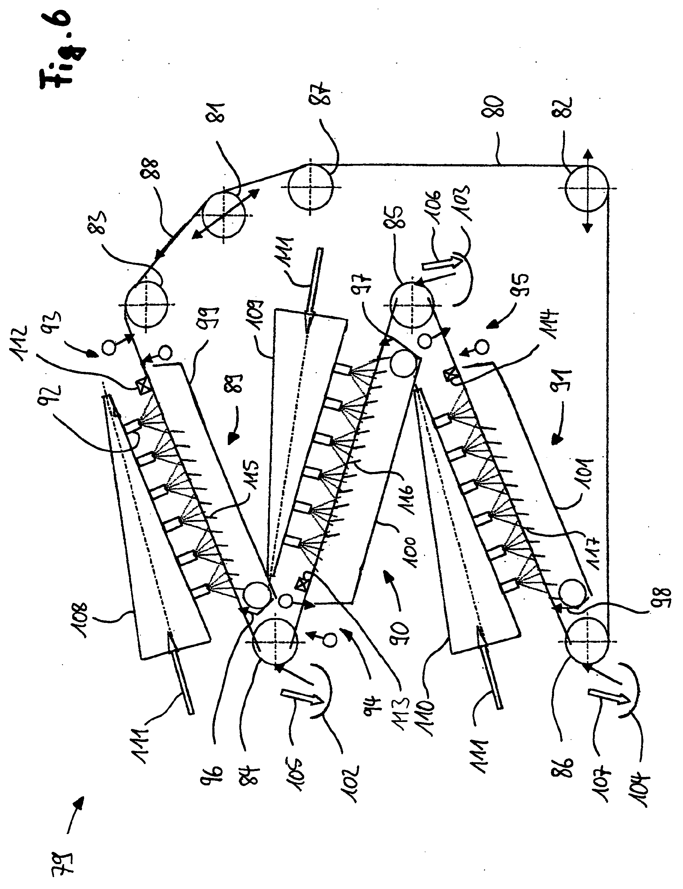

Die in Figur 6 dargestellt Sprühfraktionierung 79 umfasst ein umlaufendes Siebband 80, welches durch einen Sieblaufregler 81 angetrieben, durch einen Siebbandspanner 82 je nach Belastung gespannt und durch Siebbandumlenker 83, 84, 85, 86 und 87 umgelenkt wird. Die Umlaufrichtung des Siebbandes verläuft gemäß Pfeilrichtung 88.

Die Sprühfraktionierung 79 umfasst drei Sprühbereiche 89, 90 und 91, die jeweils eine Vielzahl von Fraktionierdüsen 92 (hier nur exemplarisch beziffert) aufweisen. Vor dem jeweiligen Sprühbereich 89, 90 und 91 ist jeweils eine Siebbandreinigungsvorrichtung 93, 94 und 95 angeordnet, die unter anderem sicherstellt, dass in dem jeweiligen Sprühbereich 89, 90 und 91 jeweils ein gereinigtes Siebband einläuft.

Unterhalb der Fraktionierdüsen 92 sind jeweils auf der den Düsen 92 abgewandten Siebbandseite Wasserabstreifer 96, 97 und 98 sowie Unterkornabläufe 99, 100 und 101 angeordnet. Hinter jedem Sprühbereich 89, 90 und 91 ist jeweils ein Oberkornablauf 102, 103 und 104 vorhanden, in welchen die längeren Fasern 105, 106 und 107 aufgefangen werden.

Um die Sprühfraktionierung 79 mit in Suspension gelösten Fasern zu versorgen, haben die Düsen 92 jeweils einen Suspensionszulauf 108, 109 und 110, der wahlweise als Rundverteiler und/oder aus einzelnen Schläuchen ausgeführt sein kann. Durch den jeweiligen Suspensionszulauf 108, 109 und 110 wird die Suspension 111 den Düsen 92 zugeführt.

Um unter anderem eine störungsfreie Fraktionierung der Fasern sicher zu stellen, hat jeder Sprühbereich 89, 90 und 91 Schiebeleisten 112, 113 und 114 sowie Schaber 115, 116 und 117. Die Schiebeleisten 112, 113 und 114 sorgen beispielsweise dafür, dass die auf der Oberseite angesammelten langen Fasern jeweils von der Oberfläche des Siebbandes 80 in die Oberkornabläufe 102, 103 und 104 gelangen. Die Schaber 115, 116 und 117 dienen dazu das Wasser verstärkt und Unterkorn von der Oberfläche des Siebbandes abzuschaben.

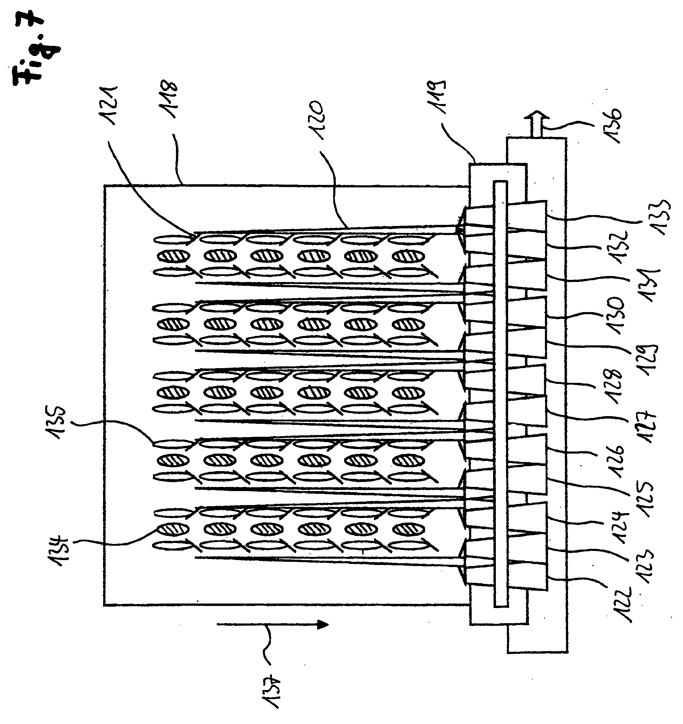

Dem umlaufenden Siebband 118 (Figur 7) sind ein Abnahmeschaber 119, ein Faserstoffsammler 120 (hier nur exemplarisch beziffert), eine Vielzahl von Schiebeleisten 121 (hier nur exemplarisch beziffert) sowie eine Vielzahl von Faserstoffabflüssen 122 bis 133 zugeordnet.

Auf das Siebband 118 auftreffende zu trennende Suspensionssprühstrahlen 134 (hier nur exemplarisch beziffert) drücken die langen Fasern 135, die nicht durch Löcher des umlaufende Siebbandes gelangt sind, seitlich zu den Schiebeleisten 121. Die Schiebeleisten 121 leiten die langen Fasern 135 mit Hilfe der Faserstoffsammler 120 zu den Faserstoffabflüssen 122 bis 133, wobei die Abnahme der langen Fasern 135 von dem umlaufenden Siebband durch den Abnahmeschaber 119 unterstützt wird. Die eingesammelten Langfasern 135 werden gemäß der Pfeilrichtung 136 abgeführt.

Während des gesamten Vorganges bewegt sich das Siebband 121 aktiv gemäß Pfeilrichtung 137 auf den Abnahmeschaber sowie auf den Faserstoffabfluss zu.

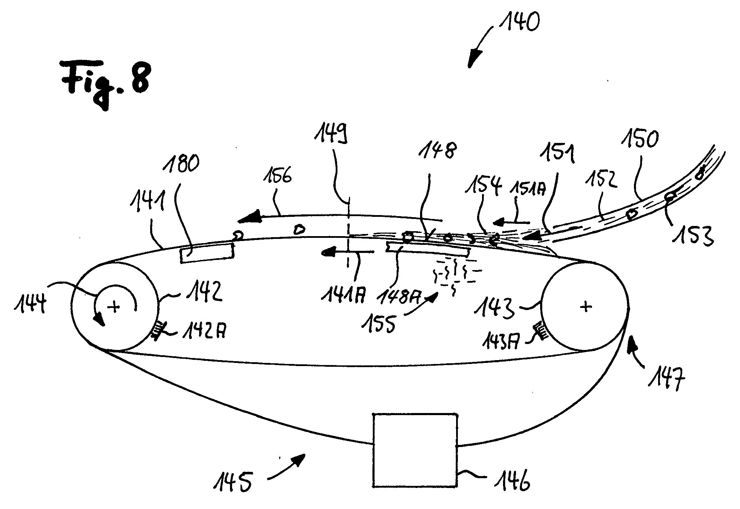

Das in Figur 8 gezeigte Trennmittel 140 umfasst einen umlaufenden Trennkörper 141, der mittels zweier Umlenkwalzen 142 und 143 gemäß Pfeilrichtung 144 umläuft. Der umlaufende Trennkörper 141 wird im Bereich 145 mittels einer Reinigungseinrichtung 146 gereinigt, so dass der Trennkörper 141 gereinigt ist, bevor er im Bereich 147 wieder auf die Umlenkwalze 143 geführt wird.

Um ein Übertragen von Verschmutzungen durch die Walzen 142 bzw. 143 auf den Trennkörper 141 zu unterbinden, weisen die Umlenkwalzen 142 bzw. 143 jeweils eine Walzenreinigungseinrichtung 142A bzw. 143A auf.

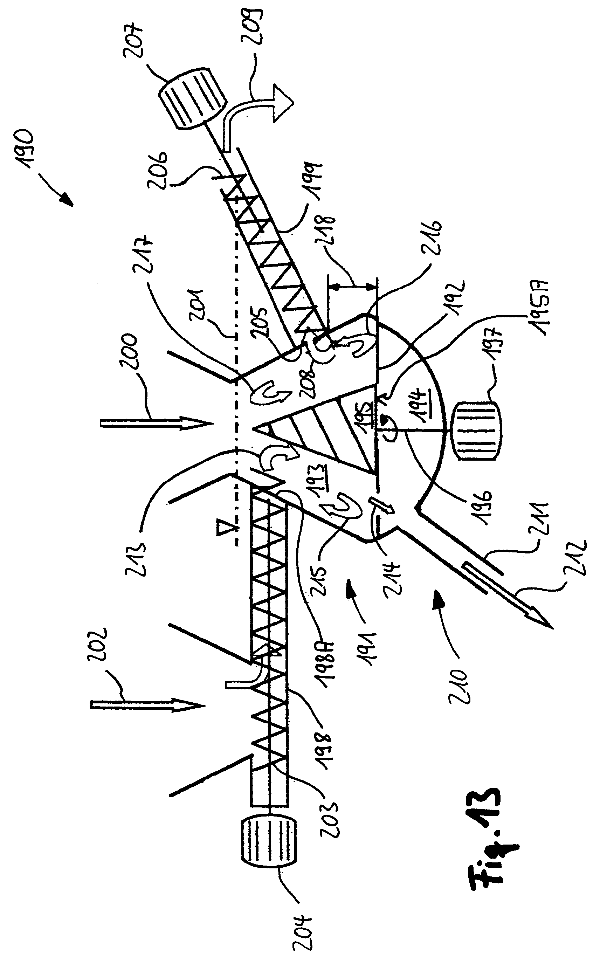

Mittels des umlaufenden Trennkörpers 141 wird eine Trennfläche 148 bereitgestellt, die konvex ausgebildet ist und im Scheitelpunkt 149 ihre höchste Erhebung aufweist. Darüber hinaus weist die Trennfläche 148 eine Vielzahl an Trennspalten 175 (siehe Figur 12) auf, die durch Zwischenräume des mehrfach umlaufenden Trennkörpers 141 gebildet werden. In diesem Ausführungsbeispiel besteht der umlaufende Trennkörper 141 aus einem Endlosriemenband, das durch ein mehrmaliges Umlenken die Trennfläche 148 bildet. Das Endlosriemenband wird im Bereich der Trennfläche 148 durch konvexe Führungsmittel 148A geführt, die unmittelbar unterhalb der Trennfläche 148 angeordnet sind.

Mittels eines Suspensionszulaufes 150 wird der Trennfläche 148 in einem Bereich der Umlenkwalze 143 ein Suspensionsgemenge 151 zugeleitet. Das Suspensionsgemenge 151 besteht im Wesentlichen aus einem wässrigen Trägermedium 152 und darin befindlichen Leichtstoffen 153. In der Regel haften den Leichtstoffen faserartige Gebilde 155 an.

Das derart zugeleitete Suspensionsgemenge 151 sammelt sich auf der Trennfläche 148 vor dem Scheitelpunkt 149 zu einer Art See 154 an, da die Trennspalten derart dimensioniert sind, dass insbesondere das wässrige Trägermedium 152 nicht schnell genug durch die Trennspalten 175 abfließt. An den Leichtstoffen 153 anhaftende faserartige Gebilde 155 fließen mit dem wässrigen Trägermedium 152 durch die Trennspalten 175 der Trennfläche 148 ab, sobald sie von den Leichtstoffen 153 getrennt sind.

Der Trennkörper 141 bewegt sich entlang der Horizontalen mit einer Geschwindigkeitskomponente v_{Tx} 141A. Das zugeleitete Suspensionsgemenge 151 hat eine Geschwindigkeitskomponente v_{Lx}. 151A. Beide Geschwindigkeitskomponenten v_{Tx} 141A und v_{Lx} 151 A sind gleich gerichtet und unterscheiden sich durch einen Betrag Δvₖᵣᵢₜ. Der Betrag Δvₖᵣᵢₜ beträgt in diesem Ausführungsbeispiel aufgrund der Leichtstoff- und Faserbeschaffenheit ca. 1 m/s. Umfasst das Suspensionsgemenge 151 andere Leichtstoffe 153, kann Δvₖᵣᵢₜ auch einen anderen Wert annehmen.

Die auf die Trennfläche 148 mit dem Suspensionsgemenge 151 zugeleiteten Leichtstoffe 153 bekommen Kontakt zu dem umlaufenden Trennkörper 141 der Trennfläche 148 und werden aufgrund der zwischen den Leichtstoffen 153 und dem umlaufenden Trennkörper 141 auftretenden Haftung mitgerissen und beschleunigt. Die bis zu diesem Zeitpunkt an den Leichtstoffen 153 anhaftenden faserartigen Gebilde 125 reißen aufgrund einer zu dem wässrigen Trägermedium 152 auftretenden Reibung ab und bleiben in dem wässrigen Trägermedium 152 zurück, während die Leichtstoffe 153 in Pfeilrichtung 156 mittels des Trennkörpers 141 weiter gefördert werden. Die in dem wässrigen Trägermedium 152 verbliebenen faserartigen Gebilde 155 fließen mit diesem von der Oberseite der Trennfläche 148 durch die stationären Trennspalten 175 zur Unterseite der Trennfläche 148 und werden von dort aus dem Trennmittel 140 abgeleitet.

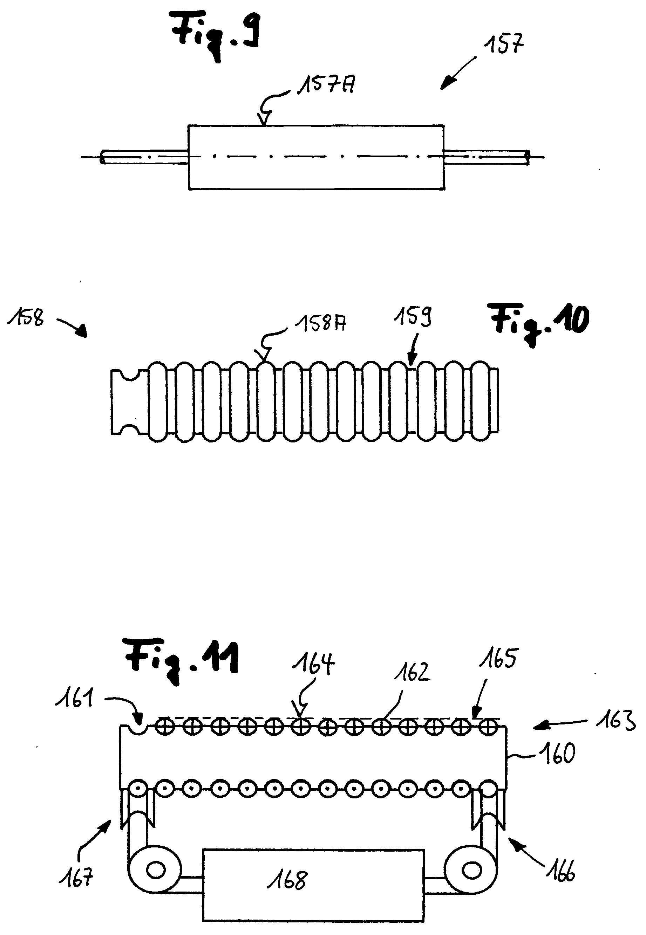

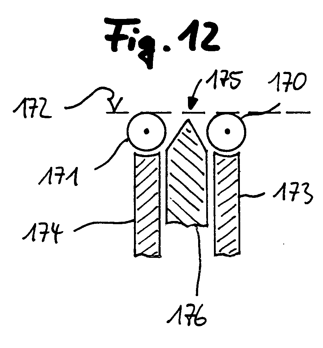

Die in den Figuren 9 bis 11 abgebildeten Umlenkwalzen 157, 158 und 160 haben jeweils eine glatte Oberfläche 157A bzw. 158A und können als Umlenkwalzen 143 bzw. 144 zur Anwendung kommen. Die glatten Oberflächen 157A und 158A zeichnen sich insbesondere dadurch aus, dass sie in Richtung ihrer Längsachsen keine spiralförmigen Strukturen auf ihren Oberflächen 157A und 158A aufweisen. Hierdurch kann einem Verdrillen entgegengewirkt werden.

Die Umlenkwalzen 158 und 160 haben darüber hinaus Führungsnuten 159 bzw. 161 (hier nur exemplarisch beziffert), in welchen der umlaufende Trennkörper 141 bzw. 162 gegenüber der Umlenkwalze 158 bzw. 166 geführt ist, während die Umlenkwalze 157 zylinderförmig ist, sodass sich ein Trennkörper auf ihr selbst ausrichten kann.

Wie exemplarisch anhand Figur 11 erläutert, bildet der umlaufende Trennkörper 141 bzw. 162 im Bereich 163 eine Trennfläche 164, die stationäre Trennspalten 165 (hier nur exemplarisch beziffert) aufweist. Der Umlenkwalze 160 wird der umlaufende Trennkörper 162 im Bereich 166 zugeführt und im Bereich 167 abgeführt. Zwischen dem Zuführbereich 166 und dem Abführbereich 167 ist eine Reinigungseinrichtung 168 angeordnet, die den umlaufenden Trennkörper 162 kontinuierlich reinigt, während der Trennkörper 162 zurückgeführt wird. Der Trennkörper 162 ist somit gereinigter, bevor er der Umlenkwalze 160 zugeführt wird.

Die Figur 12 zeigt zwei Obergurte 170 und 171 eines umlaufenden Trennkörpers 141 bzw. 162 (siehe Figur 8 bzw. Figur 11). Die Obergurte 170 und 171 bilden einen Teil einer Trennfläche 172 und werden jeweils durch eine Führungseinrichtung 173 bzw. 174 geführt. Die Führungseinrichtungen 173, 174 sind unmittelbar unter den Obergurten 170, 171 angeordnet, so dass der umlaufende Trennkörper 141 bzw. 162 unmittelbar unterhalb der Trennfläche 172 geführt ist. Hierdurch ergibt sich zum einen eine gegenüber Druckkräften sehr stabile Trennfläche 172 und zum anderen werden die Obergurte 170, 171 mittels der Führungseinrichtungen 173 und 174 äußerst präzise positioniert sowie gegenüber einem Verdrillen gesichert. Die Führungen können konkav ausgebildet sein und so die in Figur 8 dargestellte Form der Obergurte des Trennmittels bedingen.

Zwischen den beiden Obergurten 170, 171 existiert ein stationärer Trennspalt 175, der lediglich durch die beiden Obergurte 170, 171 begrenzt ist. In dem stationären Trennspalt 175 ist ein Trennsteg 176 angeordnet, der in seinem oberen Bereich spitz zuläuft und zu einer höheren Trennschärfe des Trennmittels 140 (siehe Figur 8) führt. Der Trennsteg 176 ist über den gesamten Verlauf des stationären Trennspalts 175 in der Trennfläche angeordnet.

Die Anordnung nach Figur 8 kann, entsprechend der Anordnung nach Figur 5, im hinteren Bereich ebenfalls Trenneinrichtungen bzw. einen Selektierer 180 aufweisen. Darüber hinaus kann die hohe Geschwindigkeit des Trennkörpers 141 dazu genutzt werden, Partikel, die auf Hohe der Walze 144 noch auf dem Trennkörper 141 liegen, einer Beschleunigungstrennung zuzuführen, in dem diese Partikel entsprechend ihrer Bewegungsrichtung von dem Trennkörper 141 fortgeschleudert und unterschiedlich in der Umgebungsluft abgebremst werden. Es versteht sich, dass die in den Figuren 8 bis 12 dargestellte Trenneinrichtung auch in anderen Trennvorrichtungen, insbesondere in Trennvorrichtungen, bei denen auf ein Aufstauen einer Suspension verzichtet wird bzw. welche lediglich einen zweikomponentigen Massestrom ohne eine Trägerflüssigkeit oder lediglich zur Trennung einer bestimmten Komponente aus einer Trägerflüssigkeit genutzt werden sollen, zur Anwendung kommen kann.

Der in der Figur 13 illustrierte Pulper 190 umfasst einen Arbeitsbereich 191, der mittels einer Rückhalteeinrichtung 192 in einen Zulaufbereich 193 und in einen Ablaufbereich 194 unterteilt ist. Im Zulaufbereich 193 ist ein Verdichter 195 angeordnet, der über eine Kardanwelle 196 mittels eines Motors 197 angetrieben wird. Der Verdichter 195 ist mit seiner Verdichterunterseite 195A in der Nähe der Rückhalteeinrichtung 192 angeordnet. Darüber hinaus ist am Zulaufbereich 193 zum einen ein Leichtstoffzulauf 198, zum anderen ein Leichtstoffabzug 199 angeordnet. Außerdem hat der Zulaufbereich 193 einen Wasserzulauf 200.

Der Leichtstoffzulauf 198 befindet sich unterhalb der maximalen Befüllungshöhe 201 des Pulpers 190. Mittels des Leichtstoffzulaufes 198 wird der Zulaufbereich 193 des Arbeitsbereichs 191 des Pulpers 190 mit zu recycelten Leichtstoffen 202 beschickt. Der Leichtstoffzulauf 198 umfasst hierzu einen Schneckentrieb 203, welcher durch einen Motor 204 angetrieben ist. Mittels des Schneckentriebs 203 werden die Leichtstoffe 202 auch entgegen einen Widerstand in den Zulaufbereich 193 gefördert.

Der Leichtstoffabzug 199 ist an einer Leichtstoffaustragsöffnung 205 angeordnet, die im Wesentlichen gegenüberliegend und unterhalb des Leichtstoffzulaufes 198 angeordnet ist. Der Leichtstoffabzug 199 umfasst ebenfalls einen Schneckentrieb 206, der mittels eines Motors 207 angetrieben ist. Um einen kontinuierlichen Austrag von gereinigten Leichtstoffen 208 und abgetrennten langen bzw. großen Anhaftungen zu gewährleisten, werden die Leichtstoffe 208 mittels des Schneckentriebes 206 in einem Leichtstoffaustragsmassestrom 209 ― ggf. mit Wasser ― aus dem Arbeitsbereich 191 des Pulpers 190 entnommen.

In einem unteren Bereich 210 des Ablaufbereichs 194 weist der Pulper 190 einen Ablauf 211 auf, mittels welchem von den Leichtstoffen 202 getrennte kleine bzw. kurze Anhaftungen 212 sowie das dem Pulper 190 zugeführte Wasser aus dem Arbeitsbereich 191 entnommen wird.

Die mittels des Leichtstoffzulaufes 198 über eine Leichtstoffzulauföffnung 198A zugeführten Leichtstoffe 202 werden mit dem Schneckentrieb 203 gegen den Verdichter 195 gemäß Pfeilrichtung 213 gepresst. Hierdurch wird bei dieser Ausführungsform die Stoffdichte weiter erhöht und es werden die Bestandteile der zu recycelten Leichtstoffe 202 besonders innig gegeneinander gerieben, so dass sich die an den Leichtstoffen 202 befindlichen Anhaftungen 212 besonders gründlich trennen.

Unter Zuhilfenahme des zugeführten Wassers 200 werden die von den Leichtstoffen 202 getrennten kleinen bzw. kurzen Anhaftungen 212 gemäß Pfeilrichtung 214 durch die Rückhalteeinrichtung 192 in den Ablaufbereich 194 gedrückt.

Insbesondere an der Rückhalteeinrichtung 192 und an der Befüllungsoberkante 201 entstehen unter anderem auf Grund des rotierenden Verdichters 195 und des mittels der Pressschnecke 203 kontinuierlich geförderten Leichtstoffstroms Umkehrströmungen 215, 216 und 217. Im Bereich der Umkehrströmungen 215, 216 und 217 treten die Leichtstoffe 202 in einem besonderes innigen Kontakt zueinander, so dass dort die Anhaftungen besonders gut von den Leichtstoffen 202 getrennt werden.

Die Entnahme von gereinigten Leichtstoffen 208 und abgetrennten großen bzw. langen Anhaftungen gelingt besonders gut, wenn die Leichtstoffaustragsöffnung 205 oberhalb der Umkehrströmung 216 angeordnet ist. Die Leichtstoffaustragsöffnung 205 ist hierbei in einem Abstand 218 von der Rückhalteeinrichtung 192 entfernt angeordnet.

Es ist verständlich, dass der Abstand 218 nicht zwangsläufig durch die Ausprägung der Umkehrströmrichtung 216 bedingt ist. Vielmehr ist es möglich, die Leichtstoffaustragsöffnung 205 auch in anderen geeigneten Abständen von der Rückhalteeinrichtung 192 an dem Zulaufbereich 193 des Pulpers 190 anzuordnen.

## Patentansprüche

1. Vorrichtung zum Trennen von Leichtstoffen (202) von Anhaftungen, welche eine Rückhalteeinrichtung (192) aufweist, die einen Arbeitsbereich (191) in einen Zulaufbereich (193) und in einen Ablaufbereich (194) unterteilt, wobei in dem Zulaufbereich (193) eine Suspension aus den Leichtstoffen (202), den Anhaftungen (212) sowie einer Trägerflüssigkeit bewegt wird, ***dadurch gekennzeichnet, dass*** in dem Zulaufbereich (193) eine Leichtstoffaustragsöffnung (205) mit einem Abzug (199) angeordnet ist.

2. Vorrichtung nach Anspruch 1, ***dadurch gekennzeichnet, dass*** die Leichtstoffaustragsöffnung (205) einen Separationsabstand (218) gegenüber der Rückhalteeinrichtung (192) aufweist.

3. Vorrichtung nach Anspruch 2, ***dadurch gekennzeichnet, dass*** der Separationsabstand mehr als 10 mm, vorzugsweise mehr als 30 mm, beträgt.

4. Vorrichtung nach einem der vorstehenden Ansprüche, ***dadurch gekennzeichnet, dass*** in dem Zulaufbereich ein Verdichter angeordnet ist, in dessen Nähe eine Leichtstoffaustragsöffnung oberhalb der Verdichterunterseite angeordnet ist.

5. Vorrichtung nach einem der vorstehenden Ansprüche, ***dadurch gekennzeichnet, dass*** in dem Zulaufbereich ein zentral ein Verdichter angeordnet ist.

6. Vorrichtung nach einem der vorstehenden Ansprüche, ***dadurch gekennzeichnet, dass*** in dem Zulaufbereich ein Verdichter angeordnet ist, wobei die Leichtstoffaustragsöffnung in einem Abstand von der Verdichterunterseite angeordnet ist, der wenigstens ein Viertel der Verdichterlänge, vorzugsweise die Hälfte der Verdichterlänge, beträgt.

7. Vorrichtung nach einem der vorstehenden Ansprüche, ***dadurch gekennzeichnet, dass*** in dem Zulaufbereich ein Verdichter angeordnet ist, wobei der Verdichter als eine archimedische Schnecke ausgebildet ist.

8. Vorrichtung nach einem der vorstehenden Ansprüche, ***dadurch gekennzeichnet, dass*** die Leichtstoffaustragsöffnung derart beabstandet von der Rückhalteeinrichtung ist, dass die Leichtstoffaustragsöffnung im Wesentlichen außerhalb einer in der Nähe der Rückhalteeinrichtung vorhandenen Umkehrströmung angeordnet ist.

9. Vorrichtung nach einem der vorstehenden Ansprüche, ***dadurch gekennzeichnet, dass*** die Leichtstoffaustragsöffnung unterhalb und/oder gegenüberliegend einer Zulauföffnung angeordnet ist.

10. Vorrichtung nach einem der vorstehenden Ansprüche, ***gekennzeichnet durch*** einen Abzug, der eine Schnecken- oder Wendelschleuse aufweist.

11. Vorrichtung nach Anspruch 10, ***dadurch gekennzeichnet, dass*** die Schnecken- oder Wendelschleuse über die Leichtstoffaustragsöffnung des Abzugs hinaus bis in den Arbeitsbereich hinein angeordnet ist.

12. Vorrichtung nach einem der vorstehenden Ansprüche, ***gekennzeichnet durch*** einen Abzug, der derart in einem Winkel gegenüber der Rückhalteeinrichtung angeordnet ist, dass die Leichtstoffe nach oben, im Wesentlichen entgegen der Schwerkraft, aus dem Arbeitsbereich entnommen werden.

13. Verfahren zum Trennen von Leichtstoffen von Anhaftungen, bei welchem die Leichtstoffe mit den Anhaftungen in einen Zulaufbereich geführt und die Anhaftungen von den Leichtstoffen getrennt werden sowie ein Teil der getrennten Anhaftungen durch eine Rückhalteeinrichtung in einen Ablaufbereich gelangen und dort entnommen werden, ***dadurch gekennzeichnet, dass*** die Leichtstoffe sowie größere oder längere Anhaftungen in dem Zulaufbereich verbleiben und dort abgezogen werden.

14. Verfahren nach Anspruch 13, ***dadurch gekennzeichnet, dass*** die Leichtstoffe beabstandet von der Rückhalteeinrichtung aus dem Zulaufbereich abgezogen werden.

15. Verfahren nach Anspruch 13 oder 14, ***dadurch gekennzeichnet, dass*** die Leichtstoffe beim Zuführen in den Zulaufbereich gegen einen Verdichter geführt werden.

16. Verfahren nach einem der Ansprüche 13 bis 15, ***dadurch gekennzeichnet, dass*** die Leichtstoffe innerhalb des Zulaufbereichs in einer Zirkulationsströmung gefördert werden.

17. Verfahren nach einem der Ansprüche 13 bis 16, ***dadurch gekennzeichnet, dass*** die Leichtstoffe dem Zulaufbereich kraftschlüssig, vorzugsweise mittels einer Schnecken- bzw. Wendelschleuse, zugeführt werden.

18. Verfahren nach einem der Ansprüche 13 bis 17, ***dadurch gekennzeichnet, dass*** die ein mit Leichtstoffen befüllter Zulaufbereich zu mehr als 70%, vorzugsweise zu mehr als 90%, seines Volumens mit einer Suspension geflutet wird.
